# EUROPEAN PATENT APPLICATION

(11) **EP 4 557 840 A1**
(43) Date of publication of application: **21.05.2025**
(21) Application number: 23889134.5
(22) Date of filing: 08.11.2023
(51) Int. Cl.: H04W 52/02, H04W 76/15, H04W 84/12

(54) **METHOD AND DEVICE FOR EMLMR-BASED COMMUNICATION IN WIRELESS LAN**

(30) Priority: 08.11.2022 KR 20220147553
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2023/017838
(87) International publication number: WO 2024/101876

(57) **Abstract**

A method and a device for EMLMR-based communication in a wireless LAN are disclosed. A method of an STA MLD comprises the steps of: configuring a maximum NSS for an EMLMR operation with an AP MLD; receiving, from the AP MLD, a use indication of n spatial streams less than or equal to the maximum NSS in a first link; and performing communication with the AP MLD by using the n spatial streams in the first link.

## Description

### [Technical Field]

The present disclosure relates to a wireless local area network (LAN) communication technique, and more particularly, to a power saving technique and a communication technique in a wireless LAN supporting enhanced multi-link multi-radio (EMLMR) operations.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The standards that use wireless LAN technology are mainly developed as the Institute of Electrical and Electronics Engineers (IEEE) 802.11 standards. As the aforementioned wireless LAN technology has been developed and widely adopted, applications utilizing wireless LAN technology have diversified, and demand has arisen for wireless LAN technology that supports a higher throughput.

As applications requiring higher throughput and applications requiring real-time transmission occur, a wireless LAN can support communication using an expanded frequency bandwidth. In this case, methods to support efficient transmission operations and/or efficient power-saving operations may be required.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for power saving in a wireless LAN supporting enhanced multi-link multi-radio (EMLMR) operations.

### [Technical Solution]

A method of a station (STA) multi-link device (MLD), according to exemplary embodiments of the present disclosure for achieving the above-described objective, may comprise: configuring a maximum number of spatial streams (NSS) for an enhanced multi-link multi-radio (EMLMR) operation with an access point (AP) MLD; receiving, from the AP MLD, an instruction to use n spatial streams equal to or fewer than the maximum NSS on a first link; and performing communication with the AP MLD using n spatial streams on the first link, wherein n is a natural number.

The method may further comprise: performing communication with the AP MLD using (maximum NSS - n) spatial streams on the second link.

When (maximum NSS - n) is 0, communication between the STA MLD and the AP MLD may not be performed on link(s) other than the first link.

The method may further comprise: performing communication with the AP MLD using a number of spatial streams corresponding to a default NSS on each link, wherein when the EMLMR operation is configured and the maximum NSS is configured, communication between the STA MLD and the AP MLD on each link may be performed using a number of spatial streams equal to or fewer than the maximum NSS.

When n exceeds the default NSS, one or more spatial streams configured for link(s) other than the first link may be reconfigured for the first link, and a sum of the number of the one or more spatial streams and the default NSS may be n.

The reconfiguring of the one or more spatial streams may be performed based on at least one of priorities or a reconfiguration scheme of spatial streams on each link.

The method may further comprise: configuring a maximum power saving (PS)-NSS for a power saving operation with the AP MLD, wherein when the power saving operation is performed on a link other than the first link, communication between the STA MLD and the AP MLD on the first link may be performed using a number of spatial streams equal to or fewer than the maximum PS-NSS, and the maximum PS-NSS may be configured to be smaller than the maximum NSS.

An initial frame received from the AP MLD on the first link may include the instruction to use n spatial streams.

The maximum NSS may be configured in a configuration procedure of the EMLMR operation between the STA MLD and the AP MLD.

A method of a STA MLD, according to exemplary embodiments of the present disclosure for achieving the above-described objective, may comprise: configuring a maximum number of spatial streams (NSS) for an enhanced multi-link multi-radio (EMLMR) operation with an access point (AP) MLD; transmitting, to the AP MLD, an instruction to use n spatial streams equal to or fewer than the maximum NSS on a first link; and performing communication with the AP MLD using n spatial streams on the first link, where n is a natural number.

The method may further comprise: performing communication with the AP MLD using (maximum NSS - n) spatial streams on the second link.

When (maximum NSS - n) is 0, communication between the STA MLD and the AP MLD may not be performed on link(s) other than the first link.

The method may further comprise: performing communication with the AP MLD using a number of spatial streams corresponding to a default NSS on each link, wherein when the EMLMR operation is configured and the maximum NSS is configured, communication between the STA MLD and the AP MLD on each link may be performed using a number of spatial streams equal to or fewer than the maximum NSS.

When n exceeds the default NSS, one or more spatial streams configured for link(s) other than the first link may be reconfigured for the first link, and a sum of the number of the one or more spatial streams and the default NSS may be n.

The reconfiguring of the one or more spatial streams may be performed based on at least one of priorities or a reconfiguration scheme of spatial streams on each link.

A method of an access point (AP) MLD, according to exemplary embodiments of the present disclosure for achieving the above-described objective, may comprise: configuring a maximum number of spatial streams (NSS) for an enhanced multi-link multi-radio (EMLMR) operation with a station (STA) MLD; transmitting, to the STA MLD, an instruction to use n spatial streams equal to or fewer than the maximum NSS on a first link; and performing communication with the STA MLD using n spatial streams on the first link, where n is a natural number.

The method may further comprise: performing communication with the STA MLD using (maximum NSS - n) spatial streams on the second link.

When (maximum NSS - n) is 0, communication between the STA MLD and the AP MLD may not be performed on link(s) other than the first link.

The method may further comprise: performing communication with the STA MLD using a number of spatial streams corresponding to a default NSS on each link, wherein when the EMLMR operation is configured and the maximum NSS is configured, communication between the STA MLD and the AP MLD on each link may be performed using a number of spatial streams equal to or fewer than the maximum NSS.

The method may further comprise: configuring a maximum power saving (PS)-NSS for a power saving operation with the STA MLD, wherein when the power saving operation is performed on a link other than the first link, communication between the STA MLD and the AP MLD on the first link may be performed using a number of spatial streams equal to or fewer than the maximum PS-NSS, and the maximum PS-NSS may be configured to be smaller than the maximum NSS.

### [Advantageous Effects]

According to the present disclosure, a communication node in a wireless LAN can support EMLMR operations. The communication node may include a STA, STA MLD, AP, and/or AP MLD. Parameter(s) for EMLMR operation may be configured between a STA (e.g., STA MLD) and an AP (e.g., AP MLD). The parameter(s) may include parameter(s) for power-saving operations and/or parameter(s) for multi-link communication. The communication node can perform efficient power-saving operations and/or efficient multi-link communication based on the parameter(s).

### [Description of Drawings]

FIG. 1 is a block diagram illustrating a first exemplary embodiment of a communication node constituting a wireless LAN system.
FIG. 2 is a conceptual diagram illustrating a first exemplary embodiment of a multi-link configured between multi-link devices (MLDs).
FIG. 3A is a timing diagram of a first exemplary embodiment of EMLMR operations.
FIG. 3B is a timing diagram of a second exemplary embodiment of EMLMR operations.
FIG. 3C is a timing diagram of a third exemplary embodiment of EMLMR operations.
FIG. 4 is a timing diagram illustrating a first exemplary embodiment of multi-link communication in a wireless LAN supporting EMLMR operations.
FIG. 5 is a timing diagram illustrating a second exemplary embodiment of multi-link communication in a wireless LAN supporting EMLMR operations.
FIG. 6 is a timing diagram illustrating a third exemplary embodiment of multi-link communication in a wireless LAN supporting EMLMR operations.
FIG. 7 is a timing diagram illustrating a fourth exemplary embodiment of multi-link communication in a wireless LAN supporting EMLMR operations.
FIG. 8 is a timing diagram illustrating a fifth exemplary embodiment of multi-link communication in a wireless LAN supporting EMLMR operations.
FIG. 9 is a timing diagram illustrating a sixth exemplary embodiment of multi-link communication in a wireless LAN supporting EMLMR operations.
FIG. 10 is a timing diagram illustrating a seventh exemplary embodiment of multi-link communication in a wireless LAN supporting EMLMR operations.
FIG. 11 is a timing diagram illustrating an eighth exemplary embodiment of multi-link communication in a wireless LAN supporting EMLMR operations.
FIG. 12 is a timing diagram illustrating a first exemplary embodiment of multi-link communication in a wireless LAN supporting EMLMR operation and EMLSR operation.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a 'wireless communication network'.

In exemplary embodiments, 'configuration of an operation (e.g., transmission operation)" may mean that 'configuration information (e.g., information element(s), parameter(s)) for the operation' and/or 'information indicating to perform the operation' is signaled. 'Configuration of an information element (e.g., parameter)" may mean that the information element is signaled. 'Configuration of a resource (e.g., resource region)' may mean that setting information of the resource is signaled. A transmission time of a frame may refer to a transmission start time or a transmission end time, and a reception time of a frame may refer to a reception start time or a reception end time. A transmission time may be interpreted as corresponding to a reception time. A time point may be interpreted as a time, and a time may be interpreted as a time point.

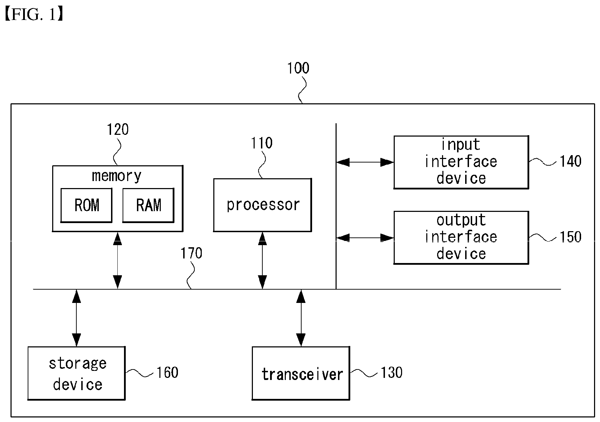

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. An access point may refer to 'AP', and a station may refer to 'STA' or 'non-AP STA'. An operating channel width supported by an AP may be 20 megahertz (MHz), 80MHz, 160MHz, or the like. An operating channel width supported by a STA may be 20MHz, 80MHz, or the like.

The communication node 100 may include at least one processor 110, a memory 120, and a transceiver 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The respective components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute program commands stored in at least one of the memory 120 and the storage device 160. The processor 110 may refer to a central processing unit (CPU), a graphics processing unit (GPU), or a dedicated processor on which the methods according to the exemplary embodiments of the present disclosure are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

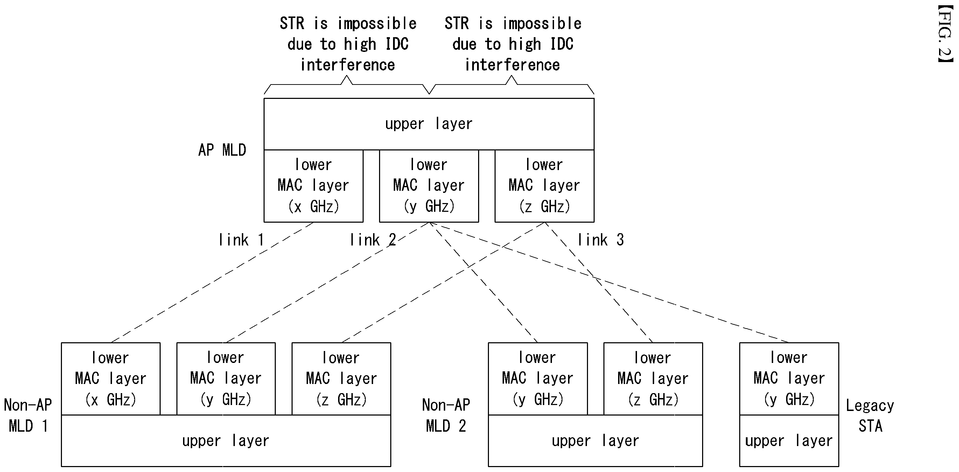

FIG. 2 is a conceptual diagram illustrating a first exemplary embodiment of a multi-link configured between multi-link devices (MLDs).

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between a link 1 and a link 2 in the frequency domain) is sufficient, the MLD may be able to perform an STR operation. For example, the MLD may transmit a physical layer convergence procedure (PLCP) protocol data unit (PPDU) 1 using the link 1 among multiple links, and may receive a PPDU 2 using the link 2 among multiple links. On the other hand, if the MLD performs an STR operation when the band separation between multiple links is not sufficient, in-device coexistence (IDC) interference, which is interference between the multiple links, may occur. Accordingly, when the bandwidth separation between multiple links is not sufficient, the MLD may not be able to perform an STR operation. A link pair having the above-described interference relationship may be a non-simultaneous transmit and receive (NSTR)-limited link pair. Here, the MLD may be referred to as 'NSTR AP MLD' or 'NSTR non-AP MLD'.

For example, a multi-link including a link 1, a link 2, and a link 3 may be configured between an AP MLD and a non-AP MLD 1. When a band separation between the link 1 and the link 3 is sufficient, the AP MLD may perform an STR operation using the link 1 and the link 3. That is, the AP MLD may transmit a frame using the link 1 and receive a frame using the link 3. When a band separation between the link 1 and the link 2 is insufficient, the AP MLD may not be able to perform an STR operation using the link 1 and the link 2. When a band separation between the link 2 and the link 3 is not sufficient, the AP MLD may not be able to perform an STR operation using the link 2 and the link 3.

Meanwhile, in a wireless LAN system, a negotiation procedure for a multi-link operation may be performed in an access procedure between a station and an access point. A device (e.g., access point, station) that supports multiple links may be referred to as 'multi-link device (MLD)'. An access point supporting multiple links may be referred to as 'AP MLD', and a station supporting multiple links may be referred to as 'non-AP MLD' or 'STA MLD'. The AP MLD may have a physical address (e.g., MAC address) for each link. The AP MLD may be implemented as if an AP in charge of each link exists separately. A plurality of APs may be managed within one AP MLD. Therefore, coordination between a plurality of APs belonging to the same AP MLD may be possible. A STA MLD may have a physical address (e.g., MAC address) for each link. The STA MLD may be implemented as if a STA in charge of each link exists separately. A plurality of STAs may be managed within one STA MLD. Therefore, coordination between a plurality of STAs belonging to the same STA MLD may be possible.

For example, an AP1 of the AP MLD and a STA1 of the STA MLD may each be responsible for a first link and perform communication using the first link. An AP2 of the AP MLD and a STA2 of the STA MLD may each be responsible for a second link and perform communication using the second link. The STA2 may receive status change information for the first link on the second link. In this case, the STA MLD may collect information (e.g., status change information) received on the respective links, and control operations performed by the STA1 based on the collected information.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a STA is described, an AP corresponding thereto may perform an operation corresponding to the operation of the STA. Conversely, when an operation of an AP is described, a STA corresponding thereto may perform an operation corresponding to the operation of the AP.

In the present disclosure, operations of a STA may be interpreted as operations of a STA MLD, operations of a STA MLD may be interpreted as operations of a STA, operations of an AP may be interpreted as operations of an AP MLD, and operations of an AP MLD may be interpreted as operations of an AP. A STA of a STA MLD may refer to a STA affiliated with the STA MLD, and an AP of an AP MLD may refer to an AP affiliated with the AP MLD. When a STA MLD includes a first STA operating on a first link and a second STA operating on a second link, operations of the STA MLD on the first link may be interpreted as operations of the first STA, and operations of the STA MLD on the second link may be interpreted as operations of the second STA. When an AP MLD includes a first AP operating on the first link and a second AP operating on the second link, operations of the AP MLD on the first link may be interpreted as operations of the first AP, and operations of the AP MLD on the second link may be interpreted as operations of the second AP. In the present disclosure, a communication node (e.g., STA, STA MLD, AP, and/or AP MLD) may support multi-link single radio (MLSR), enhanced MLSR (EMLSR), multi-link multi-radio (MLMR), and/or enhanced MLMR (EMLMR).

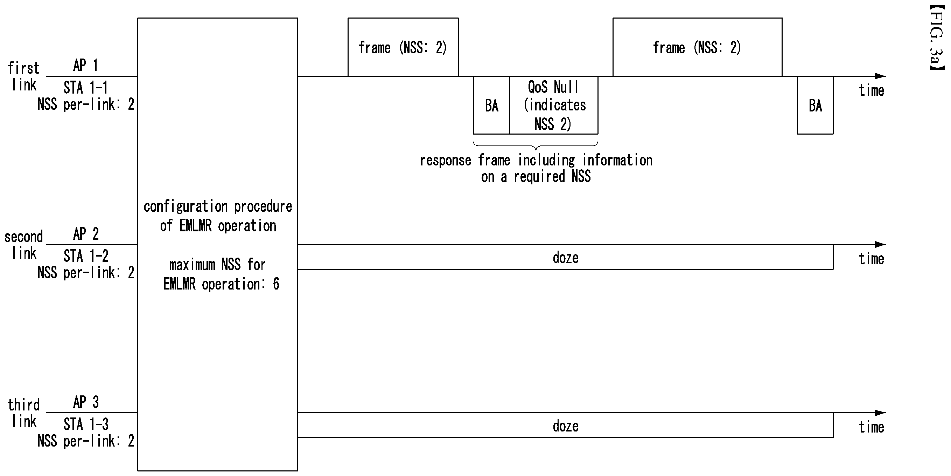

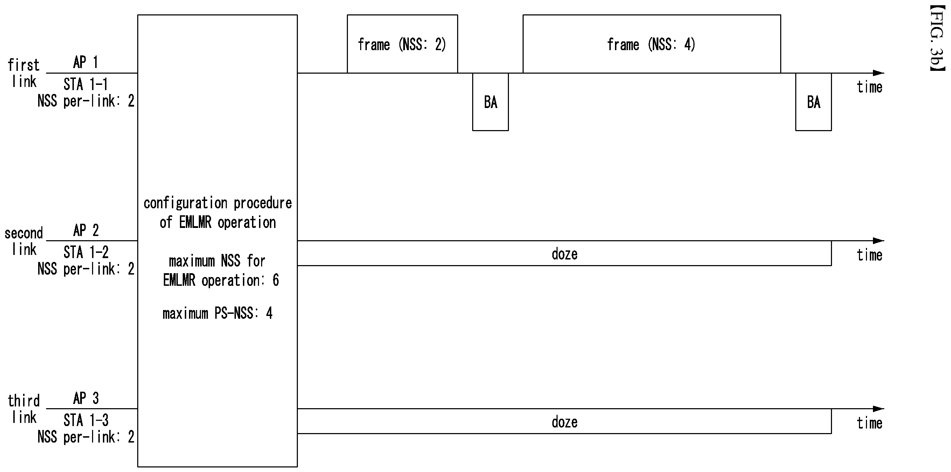

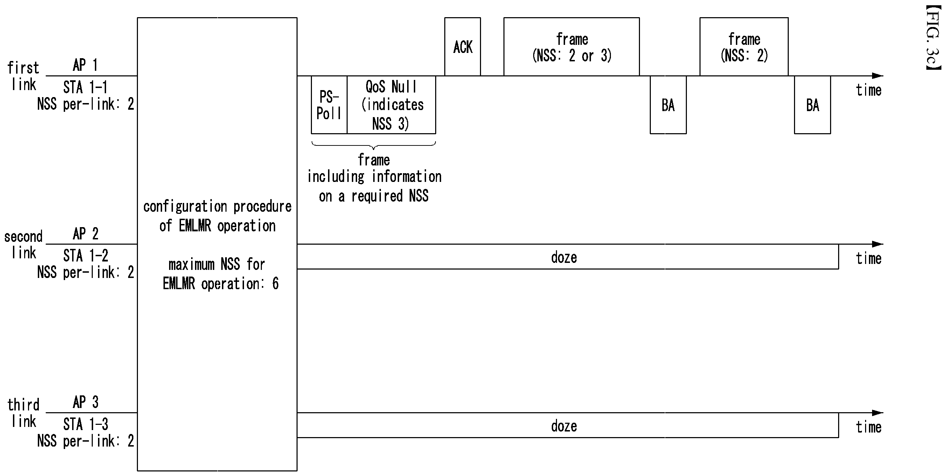

FIG. 3A is a timing diagram of a first exemplary embodiment of EMLMR operations, FIG. 3B is a timing diagram of a second exemplary embodiment of EMLMR operations, and FIG. 3C is a timing diagram of a third exemplary embodiment of EMLMR operations.

As shown in FIG. 3A, FIG. 3B, and FIG. 3C, an AP 1, AP 2, and AP 3 may be APs affiliated with an AP MLD. The AP 1 may operate on a first link, the AP 2 may operate on a second link, and the AP 3 may operate on a third link. A STA 1-1, STA 1-2, and STA 1-3 may be STAs affiliated with a STA MLD 1. The STA 1-1 may operate on the first link, the STA 1-2 may operate on the second link, and the STA 1-3 may operate on the third link.

The STA MLD 1 may perform a capability negotiation procedure with the AP MLD using one of multiple links. The capability negotiation procedure may be performed through an association procedure between the STA MLD 1 and the AP MLD. During the capability negotiation procedure, the number of spatial streams available for use by the STA on each link may be configured or determined. In other words, the number of per-link spatial streams may be configured. For example, during the capability negotiation procedure, the number of per-link spatial streams may be configured as 2. In this case, each of the STA 1-1, STA 1-2, and STA 1-3 affiliated with the STA MLD 1 may perform communication on each link using 2 spatial streams. The number of per-link spatial streams configured during the capability negotiation procedure may be an initial number of spatial streams (NSS) or a default NSS for each link.

The STA MLD 1 may perform a configuration procedure of EMLMR operation with the AP MLD using one of multiple links. A STA MLD for which EMLMR operation is configured (e.g., STA MLD supporting EMLMR operation) may be referred to as an EMLMR STA MLD. A STA for which EMLMR operation is configured (e.g., STA supporting EMLMR operation) may be referred to as an EMLMR STA. For example, the STA MLD 1 may be an EMLMR STA MLD, and the STA 1-1, STA 1-2, and STA 1-3 may each be EMLMR STAs. A link on which an EMLMR STA MLD performs EMLMR operation may be referred to as an EMLMR link. For example, the STA MLD 1 may perform EMLMR operation on the first link, the second link, and the third link, and the first link, the second link, and the third link may be referred to as EMLMR links. The configuration procedure of EMLMR operation may be performed through exchange of enhanced multi-link (EML) operating mode notification (OMN) frames between the STA MLD 1 and the AP MLD. The EML OMN frame may be an action frame. The EML OMN frame may include multiple information elements. For example, the EML OMN frame may include an EMLMR link bitmap, and the EMLMR bitmap may be used to indicate links on which EMLMR operation is performed (e.g., links supporting EMLMR operation or EMLMR links).

The EML OMN frame may include a supported modulation and coding scheme (MCS) and NSS set. The supported MCS and NSS set may be used to negotiate the maximum number of spatial streams used on each link. The number of per-link spatial streams may be configured as a value indicated by the supported MCS and NSS set included in the EML OMN frame. During the configuration procedure of EMLMR operation, the maximum NSS on each link supporting EMLMR operation may be configured as 6.

When EMLMR operation is configured and the STA MLD 1 (e.g., each STA affiliated with the STA MLD 1) receives an initial frame from the AP MLD (e.g., each AP affiliated with the AP MLD), the STA MLD 1 may switch RF chain(s) operating on other link(s) to a link on which the initial frame is received. In other words, spatial stream(s) configured for other link(s) may be reconfigured for the link on which the initial frame is received. In the present disclosure, the initial frame may refer to an initial control frame. The number of spatial streams used for transmitting the initial frame may be equal to or less than the number of spatial streams available to each STA affiliated with the STA MLD (e.g., initial NSS or default NSS). The number of spatial streams available to each STA may correspond to the number of spatial streams available per link.

The initial frame may further include padding bit(s) corresponding to an EMLMR delay time (e.g., at least one of an EMLMR padding delay or EMLMR transition delay) for an RF chain switching time (e.g., spatial stream reconfiguration time). Since the maximum NSS for EMLMR operation has been configured, the STA may perform transmission and reception operations for frames (e.g., data frames) using up to a number of spatial streams, corresponding to the maximum NSS, after receiving the initial frame. For example, if the maximum NSS for EMLMR operation is configured as 6, the STA may perform communication using up to 6 spatial streams after receiving the initial frame.

In the EMLMR operation, STA(s) (e.g., STA 1-2 and/or STA 1-3) affiliated with the STA MLD 1, which is an EMLMR STA MLD, may perform a power-saving operation. For example, if the STA 1-1 performs communication according to EMLMR operation on the first link, the STA(s) (e.g., STA 1-2 and/or STA 1-3) on other link(s) (e.g., the second link and/or the third link) may perform a power-saving operation. The power-saving operation may refer to a power management operation. The STA performing the power-saving operation may operate in a doze state. Power consumption of the STA in the doze state may be low.

When EMLMR operation is configured and the STA 1-1 receives an initial frame, RF chain(s) of the STA 1-2 (e.g., RF chain(s) operating on the second link) may be switched to the STA 1-1 (e.g., the first link on which the STA 1-1 operates), and RF chain(s) of the STA 1-3 (e.g., RF chain(s) operating on the third link) may be switched to the STA 1-1 (e.g., the first link on which the STA 1-1 operates). Switching the RF chain(s) may refer to reconfiguration of spatial streams. In this case, power consumption of the STA MLD 1 may increase. To address the above-described issue, the maximum NSS for supporting the power-saving operation may be separately configured. The maximum NSS for supporting the power-saving operation may be referred to as the maximum power-saving (PS)-NSS. The maximum PS-NSS may be exchanged between the AP MLD and STA MLD 1. The maximum PS-NSS may be configured to be less than or equal to the maximum NSS.

In the exemplary embodiment of FIG. 3A, the STA 1-1 may receive an initial frame from the AP 1. Since the STA 1-2 and STA 1-3 are in the doze state, the STA MLD 1 may wish to use only 2 spatial streams to reduce power consumption. In this case, the STA 1-1 may notify a required NSS using a response frame to the initial frame of the AP 1. The required NSS may indicate the maximum NSS that the STA 1-1 (e.g., STA MLD 1) wishes to use. The response frame to the initial frame may be generated in form of an aggregated (A)-MAC layer protocol data unit (MPDU) including a block acknowledgment (BA) frame and a QoS Null frame. A high throughput (HT) control field included in the QoS Null frame may include information (e.g., field, subfield, bitmap, or information element) indicating the required NSS. The HT control field may include an operating mode indicator (OMI), which is A-control information. The OMI (e.g., OMI field) may indicate the required NSS. Alternatively, the HT control field may include a separate bitmap, separate information element, or separate field indicating the required NSS. The required NSS may be equal to or less than the maximum NSS or the maximum PS-NSS. As another method, the response frame to the initial frame may be generated in form of an A-MPDU including a BA frame and an action frame (e.g., 'Action No Ack' frame that is a type of action frame). The action frame may be a frame (e.g., EML OMN frame) capable of indicating NSS and MCS information. The NSS and MCS information included in the action frame may indicate the required NSS. In the present disclosure, a BA frame may be interpreted as an ACK frame depending on a context.

As another method, the response frame to the initial frame may be generated in form of an A-MPDU including a BA frame and an action frame, and the action frame may include information (e.g., field, subfield, bitmap, or information element) indicating the required NSS. An ACK policy field of the QoS Null frame and/or the action frame, which is added to the response frame along with the BA frame, may be configured to indicate 'No ACK'. Alternatively, the ACK policy field may be set to a value other than a value indicating 'No ACK'.

The AP 1 may receive the response frame to the initial frame from the STA 1-1 and may identify the BA frame included in the response frame. Additionally, the AP 1 may identify the QoS Null frame and/or the action frame included in the response frame. The AP 1 may identify the required NSS indicated by the information element (e.g., field) included in the QoS Null frame and/or the action frame. If the required NSS is configured as 2, the AP 1 may determine that the maximum NSS intended to be used by the STA 1-1 is 2. The AP 1 may identify the ACK policy field included in the QoS Null frame and/or the action frame. If the ACK policy field indicates 'No ACK', the AP 1 may not transmit a response frame to the QoS Null frame and/or the action frame. Alternatively, the AP 1 may not transmit a response frame to the QoS Null frame and/or the action frame, regardless of the ACK policy field included in the QoS Null frame and/or the action frame.

After receiving the response frame to the initial frame, the AP 1 may transmit a frame to the STA 1-1 using a number of spatial streams, which is equal to or less than the required NSS (e.g., the maximum NSS that the STA 1-1 intends to use), after a short interframe space (SIFS) from a time of receiving the response frame. The STA 1-1 may expect the AP 1 to transmit a frame using a number of spatial streams, which is equal to or less than the required NSS, and may perform a reception operation for the frame.

In the exemplary embodiment of FIG. 3B, the STA MLD 1 and AP MLD may configure the maximum NSS for power-saving operation (e.g., maximum PS-NSS) in a separate procedure after the configuration procedure of EMLMR operation. The maximum PS-NSS may be configured through an exchange procedure of EML OMN frames between the STA MLD 1 and AP MLD. The maximum PS-NSS may be the maximum NSS used by the STA MLD 1 during the power-saving operation. Some bit(s) of reserved bits in the EML OMN frame may be configured as a PS subfield. The PS subfield set to a first value may indicate that the EML OMN frame including the PS subfield includes an information element indicating the maximum PS-NSS. The PS subfield set to a second value may indicate that the EML OMN frame including the PS subfield does not include an information element indicating the maximum PS-NSS.

The STA MLD 1 may transmit an EML OMN frame including a PS subfield set to the first value to the AP MLD. When the PS subfield is set to the first value, an extremely high throughput (EHT)-MCS and NSS set field of the EML OMN frame may indicate the maximum PS-NSS. The AP MLD may receive the EML OMN frame from the STA MLD 1. If the PS subfield included in the EML OMN frame is set to the first value, the AP MLD may determine that the EHT-MCS and NSS set field of the EML OMN frame indicates the maximum PS-NSS. In other words, the AP MLD may identify the maximum PS-NSS indicated by the EML OMN frame received from the STA MLD 1. The maximum PS-NSS may be equal to or greater than the number of per-link spatial streams (e.g., default NSS). For example, the maximum PS-NSS may be 4. The maximum PS-NSS may be configured to be smaller than the maximum NSS for EMLMR operation.

After the configuration of the maximum PS-NSS, the AP 1 may transmit an initial frame to the STA 1-1. The STA 1-1 may receive the initial frame from the AP 1 and transmit a response frame (e.g., BA frame or ACK frame) for the initial frame to the AP 1. The AP 1 may receive the response frame for the initial frame from the STA 1-1. After receiving the response frame, the AP 1 may transmit a frame to the STA 1-1 using a number of spatial streams, which is equal to or less than the maximum PS-NSS. When the STA MLD 1 performs a power-saving operation (e.g., when STAs are in the doze state on links other than the first link), communication between the AP 1 and STA 1-1 on the first link may be performed using spatial streams equal to or fewer than the maximum PS-NSS. For example, the AP 1 may transmit a frame to the STA 1-1 using 4 or fewer spatial streams. The STA 1-1 may expect the AP 1 to transmit a frame using spatial streams equal to or fewer than the maximum PS-NSS and may perform a reception operation for the frame.

In the exemplary embodiment of FIG. 3C, the STA 1-1 may receive a traffic indication map (TIM) from the AP 1 and identify that an indicator is configured in the TIM that indicates presence of a buffered unit (BU) to be received by the STA 1-1. In this case, the STA 1-1 may transmit a PS-Poll frame to the AP 1 to receive the BU. Since the STA 1-2 and STA 1-3 are in the doze state, the STA MLD 1 may wish to use 3 spatial streams, which is fewer than the maximum NSS (e.g., 6 spatial streams), to reduce power consumption. In this case, the PS-Poll frame transmitted by the STA 1-1 may be configured to include an information element (e.g., field) indicating the NSS (e.g., the required NSS) that the STA 1-1 intends to use.

For example, the PS-Poll frame may have a form of an A-MPDU, and a QoS Null frame and/or an action frame may be added to the PS-Poll frame. An HT control field included in the QoS Null frame added to the PS-Poll frame may include information (e.g., field, subfield, bitmap, or information element) indicating the required NSS. The required NSS may be equal to or greater than the number of per-link spatial streams (e.g., default NSS) and equal to or less than the maximum NSS. To minimize power consumption, the required NSS may be configured as a value smaller than the number of per-link spatial streams (e.g., default NSS). The HT control field may include an OMI, which is A-control information. The OMI (e.g., OMI field) may indicate the required NSS. Alternatively, the HT control field may include a separate bitmap, separate information element, or separate field indicating the required NSS.

As another method, the action frame added to the PS-Poll frame may include information (e.g., field, subfield, bitmap, or information element) indicating the required NSS. An ACK policy field of the QoS Null frame and/or the action frame, which is added to the PS-Poll frame in form of an A-MPDU, may be configured to indicate 'No ACK'. Alternatively, the ACK policy field may be set to a value other than a value indicating 'No ACK'.

The AP 1 may receive the 'PS-Poll frame and QoS Null frame' or 'PS-Poll frame and action frame' from the STA 1-1. In other words, the AP 1 may identify the PS-Poll frame and/or the QoS Null frame added to the PS-Poll frame in form of an A-MPDU. The AP 1 may identify the required NSS indicated by the information element (e.g., field) included in the QoS Null frame and/or the action frame. If the required NSS is configured as 3, the AP 1 may determine that the maximum NSS that the STA 1-1 intends to use is 3. The AP 1 may identify the ACK policy field included in the QoS Null frame and/or the action frame. If the ACK policy field indicates 'No ACK', the AP 1 may not transmit a response frame to the QoS Null frame and/or the action frame. Alternatively, the AP 1 may not transmit a response frame to the QoS Null frame and/or the action frame regardless of the ACK policy field included in the QoS Null frame and/or the action frame.

The AP 1 may transmit a response frame (e.g., ACK frame) for the PS-Poll frame to STA 1-1. The AP 1 may transmit a BU (e.g., frame including the BU) to the STA 1-1 using a number of spatial streams, which is equal to or less than the required NSS (e.g., the maximum NSS that the STA 1-1 intends to use). The STA 1-1 may expect the AP 1 to transmit the BU (e.g., frame including the BU) using spatial streams equal to or fewer than the required NSS and may perform a reception operation for the BU.

Meanwhile, the AP 1 may not be able to support the required NSS of the STA 1-1. In other words, the AP 1 may use a smaller number of spatial streams than the required NSS of the STA 1-1. In this case, the AP 1 may transmit a NACK to the STA 1-1 in response to the QoS Null frame and/or action frame indicating the required NSS. For example, the AP 1 may generate a BA frame for the 'PS-Poll frame and QoS Null frame' or 'PS-Poll frame and action frame' and transmit the BA frame to the STA 1-1. Among bits included in the BA frame, bit(s) for the QoS Null frame and/or action frame may indicate NACK.

The STA 1-1 may receive the NACK from the AP 1 for the QoS Null frame and/or action frame indicating the required NSS. In this case, the STA 1-1 may determine that the AP 1 is not able to support the required NSS. After transmitting the NACK for the QoS Null frame and/or action frame, the AP 1 may transmit a frame to the STA 1-1 using spatial streams supported by the AP 1. The STA 1-1 may expect the AP 1 to transmit a frame using spatial streams supported by the AP 1 and may perform a reception operation for the frame.

As another method, if the AP 1 does not support the required NSS of the STA 1-1, the AP 1 may transmit a frame to the STA 1-1 using spatial streams supported by the AP 1 without transmitting a response frame (e.g., BA frame) for the 'PS-Poll frame and QoS Null frame' or 'PS-Poll frame and action frame'. The STA 1-1 may receive the frame from the AP 1.

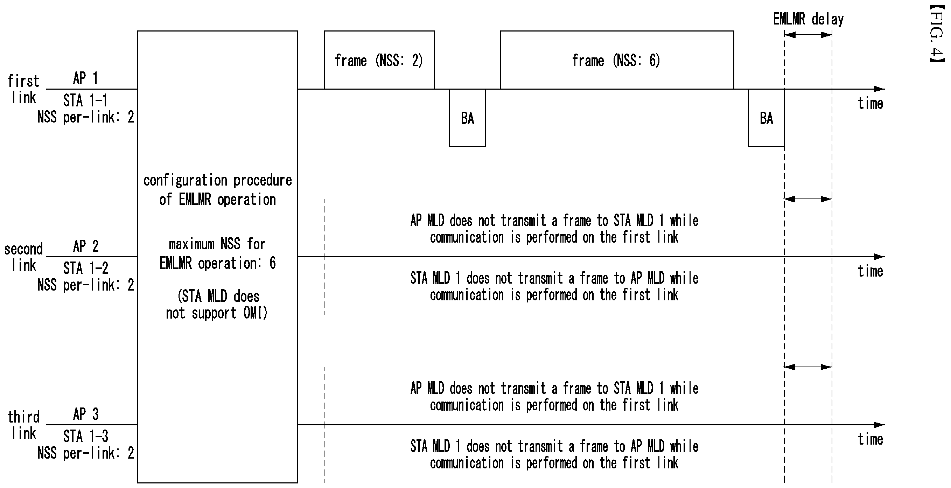

FIG. 4 is a timing diagram illustrating a first exemplary embodiment of multi-link communication in a wireless LAN supporting EMLMR operations.

As shown in FIG. 4, an AP 1, AP 2, and AP 3 may be APs affiliated with an AP MLD. The AP 1 may operate on a first link, the AP 2 may operate on a second link, and the AP 3 may operate on a third link. A STA 1-1, STA 1-2, and STA 1-3 may be STAs affiliated with a STA MLD 1. The STA 1-1 may operate on the first link, the STA 1-2 may operate on the second link, and the STA 1-3 may operate on the third link.

Each of the STA 1-1, STA 1-2, and STA 1-3, which are affiliated with the STA MLD 1, may transmit and receive frames using 2 spatial streams. In other words, the number of per-link spatial streams may be 2. The number of per-link spatial streams (e.g., 2) may be an initial NSS or default NSS for each link. The STA MLD 1 and AP MLD may perform a configuration procedure of EMLMR operation. EMLMR operation may be configured between the STA MLD 1 and AP MLD. A STA MLD for which EMLMR operation is configured (e.g., STA MLD that supports EMLMR operation) may be referred to as an EMLMR STA MLD. A STA for which EMLMR operation is configured (e.g., STA that supports EMLMR operation) may be referred to as an EMLMR STA. For example, the STA MLD 1 may be an EMLMR STA MLD, and each of the STA 1-1, STA 1-2, and STA 1-3 may be an EMLMR STA. A link on which an EMLMR STA MLD performs EMLMR operation may be referred to as an EMLMR link. For example, the STA MLD 1 may perform EMLMR operation on the first link, the second link, and the third link, and the first link, the second link, and the third link may be referred to as EMLMR links.

In the configuration procedure (e.g., negotiation procedure) of EMLMR operation between the STA MLD 1 and AP MLD, the maximum NSS used for EMLMR operation may be configured. In other words, the STA MLD 1 and AP MLD may configure the maximum NSS for EMLMR operation. For example, the maximum NSS for EMLMR operation may be configured as 6.

When EMLMR operation is configured and the STA MLD 1 (e.g., each STA affiliated with the STA MLD 1) receives an initial frame from the AP MLD (e.g., each AP affiliated with the AP MLD), the STA MLD 1 may switch RF chain(s) operating on other links to a link on which the initial frame is received. In other words, spatial streams configured for other link(s) may be reconfigured for the link on which the initial frame is received. The number of spatial streams used for transmitting the initial frame may be equal to or less than the number of spatial streams available to each STA affiliated with the STA MLD. The number of spatial streams available to each STA may correspond to the number of spatial streams available per link (e.g., default NSS).

The initial frame may further include padding bit(s) corresponding to an EMLMR delay time (e.g., at least one of an EMLMR padding delay or EMLMR transition delay) for an RF chain switching time. In the present disclosure, the RF chain switching time may refer to a time required to reconfigure spatial streams. Since the maximum NSS for EMLMR operation is configured, the STA may perform transmission and reception operations for frames (e.g., data frames) using up to a number of spatial streams, corresponding to the maximum NSS, after receiving the initial frame. For example, if the maximum NSS for EMLMR operation is configured as 6, the STA may perform communication using up to 6 spatial streams after receiving the initial frame.

The STA MLD 1 may not support an OMI. Accordingly, each STA affiliated with the STA MLD 1 may not transmit a frame including an OMI (e.g., OMI field). When EMLMR operation is configured, and the STA 1-1 receives an initial frame, an RF chain switching procedure may be performed for the STA 1-1 to use 6 spatial streams after receiving the initial frame. For example, RF chain(s) of the STA 1-2 (e.g., RF chain(s) operating on the second link) may be switched to the STA 1-1 (e.g., the first link on which the STA 1-1 operates), and RF chain(s) of the STA 1-3 (e.g., RF chain(s) operating on the third link) may be switched to the STA 1-1 (e.g., the first link on which the STA 1-1 operates). After the RF chain switching procedure is completed, the STA 1-1 may perform communication with the AP 1 using 6 spatial streams.

While communication between the STA 1-1 and AP 1 is performed on the first link, communication between the STA 1-2 and the AP 2 on the second link and/or between the STA 1-3 and AP 3 on the third link may not be performed. In the present disclosure, communication may refer to a transmission and reception procedure of frames. A start time of a period during which communication is not performed (hereinafter referred to as a 'non-communication period') may be a start time of receiving the initial frame of the AP (e.g., AP 1), a time when a receiver address (RA) of at least one MPDU included in the initial frame is identified as corresponding to the STA 1-1, or an end time of receiving the initial frame. As another method, the start time of the non-communication period may start at a time when no spatial streams are available to the STAs. The start time of the non-communication period may be identified when the STA (e.g., STA 1-1) indicated by the RA of the MPDU successfully completes decoding of the MPDU.

An end time of the non-communication period may be a time after an EMLMR delay from a transmission time of the last frame on the first link. After the non-communication period, a MediumSyncDelay time (e.g., MediumSyncDelay timer) may start. If data to be transmitted during the MediumSyncDelay time exists, transmission of the data (e.g., data frame) may be initiated by transmitting a request-to-send (RTS) frame or a multi-user (MU) RTS frame. Without transmission of an RTS frame or an MU-RTS frame, the data frame may not be transmitted. During the MediumSyncDelay time, a communication node (e.g., AP or STA) may receive a frame from another communication node. If decoding of the frame is successfully completed, the communication node may identify a duration indicated by a duration field included in the frame. If the duration is identified, the communication node may release the MediumSyncDelay timer and set a NAV. Once the MediumSyncDelay timer is released, the communication node may perform normal channel access operations.

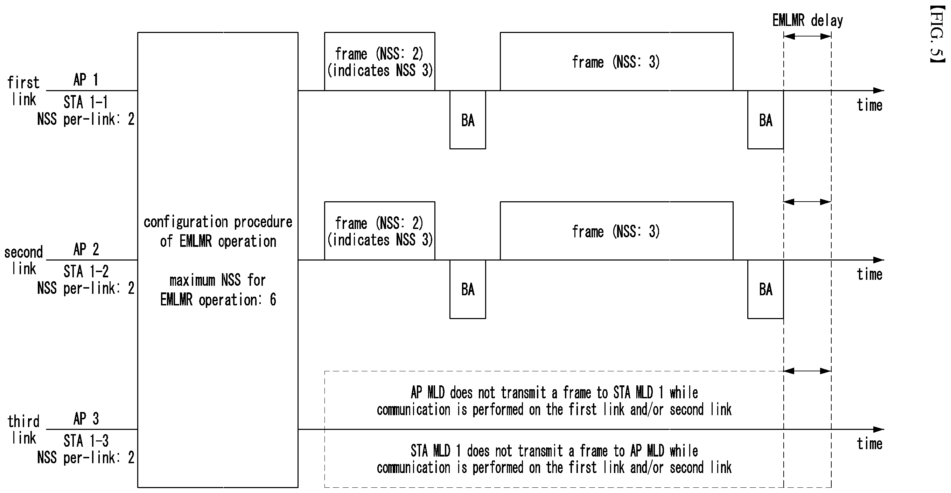

FIG. 5 is a timing diagram illustrating a second exemplary embodiment of multi-link communication in a wireless LAN supporting EMLMR operations.

As shown in FIG. 5, an AP 1, AP 2, and AP 3 may be APs affiliated with an AP MLD. The AP 1 may operate on a first link, the AP 2 may operate on a second link, and the AP 3 may operate on a third link. A STA 1-1, STA 1-2, and STA 1-3 may be STAs affiliated with a STA MLD 1. The STA 1-1 may operate on the first link, the STA 1-2 may operate on the second link, and the STA 1-3 may operate on the third link.

Each of the STA 1-1, STA 1-2, and STA 1-3, which are affiliated with the STA MLD 1, may transmit and receive frames using 2 spatial streams. In other words, the number of per-link spatial streams may be 2. The number of per-link spatial streams (e.g., 2) may be an initial NSS or default NSS for each link. The STA MLD 1 and AP MLD may perform a configuration procedure of EMLMR operation. EMLMR operation may be configured between the STA MLD 1 and AP MLD. A STA MLD for which EMLMR operation is configured (e.g., STA MLD that supports EMLMR operation) may be referred to as an EMLMR STA MLD. A STA for which EMLMR operation is configured (e.g., STA that supports EMLMR operation) may be referred to as an EMLMR STA. For example, the STA MLD 1 may be an EMLMR STA MLD, and each of the STA 1-1, STA 1-2, and STA 1-3 may be an EMLMR STA. A link on which an EMLMR STA MLD performs EMLMR operation may be referred to as an EMLMR link. For example, the STA MLD 1 may perform EMLMR operation on the first link, the second link, and the third link, and the first link, the second link, and the third link may be referred to as EMLMR links.

In the configuration procedure (e.g., negotiation procedure) of EMLMR operation between the STA MLD 1 and AP MLD, the maximum NSS used for EMLMR operation may be configured. In other words, the STA MLD 1 and AP MLD may configure the maximum NSS for EMLMR operation. For example, the maximum NSS for EMLMR operation may be configured as 6.

When EMLMR operation is configured and the STA MLD 1 (e.g., each STA affiliated with the STA MLD 1) receives an initial frame from the AP MLD (e.g., each AP affiliated with the AP MLD), the STA MLD 1 may switch RF chain(s) operating on other links to a link on which the initial frame is received. In other words, spatial streams configured for other link(s) may be reconfigured for the link on which the initial frame is received. The number of spatial streams used for transmitting the initial frame may be equal to or less than the number of spatial streams available to each STA affiliated with the STA MLD. The number of spatial streams available to each STA may correspond to the number of spatial streams available per link (e.g., default NSS).

The initial frame may further include padding bit(s) corresponding to an EMLMR delay time (e.g., at least one of an EMLMR padding delay or EMLMR transition delay) for an RF chain switching time (e.g., spatial stream reconfiguration time). Since the maximum NSS for EMLMR operation is configured, the STA may perform transmission and reception operations for frames (e.g., data frames) using up to a number of spatial streams, corresponding to the maximum NSS, after receiving the initial frame. For example, if the maximum NSS for EMLMR operation is configured as 6, the STA may perform communication using up to 6 spatial streams after receiving the initial frame.

The STA MLD 1 may support an OMI. The AP 1 may transmit an initial frame to the STA 1-1. The AP 2 may transmit an initial frame to the STA 1-2. The STA MLD 1 may be a non-simultaneous transmit and receive (NSTR) STA MLD, and the first link and the second link may be an NSTR link pair. On an NSTR link pair, STR operation may not be possible. In this case, while start times of the initial frames transmitted on the first link and the second link may differ, end times of the initial frames transmitted on the first link and the second link need to be the same. The initial frame transmitted by the AP 1 to the STA 1-1 may include an OMI (e.g., OMI field). The initial frame transmitted by the AP 2 to the STA 1-2 may also include an OMI (e.g., OMI field). The OMI may be included in a MAC header in form of an A-control. The OMI may indicate the number of spatial streams used by the STA. The initial frame transmitted by the AP 1 may include information (e.g., OMI) indicating that the STA 1-1 uses 3 spatial streams. The initial frame transmitted by the AP 2 may include information (e.g., OMI) indicating that the STA 1-2 uses 3 spatial streams.

The STA 1-1 may receive the initial frame from the AP 1 and identify, based on the information included in the initial frame, that the use of 3 spatial streams is indicated. The STA 1-2 may receive the initial frame from the AP 2 and identify, based on the information included in the initial frame, that the use of 3 spatial streams is indicated. To use 3 spatial streams on each of the first link and the second link, an RF chain switching procedure (e.g., a procedure of reconfiguring spatial streams) may be performed. For example, RF chain(s) of the STA 1-3 (e.g., RF chain(s) operating on the third link) may be switched to the STA 1-1 (e.g., the first link on which the STA 1-1 operates) and the STA 1-2 (e.g., the second link on which the STA 1-2 operates). After the RF chain switching procedure is completed, the STA 1-1 may perform communication with the AP 1 using 3 spatial streams, and the STA 1-2 may perform communication with the AP 2 using 3 spatial streams.

While communication between the STA 1-1 and AP 1 on the first link and/or communication between the STA 1-2 and AP 2 on the second link is performed, communication between the STA 1-3 and AP 3 (e.g., communication between the STA MLD 1 and AP MLD) may not be performed on the third link. In other words, if spatial streams for the third link (e.g., the STA 1-3 operating on the third link) are unavailable, communication between the STA 1-3 and AP 3 may not be performed on the third link. A start time of the period during which communication is not performed (e.g., non-communication period) may be a start time of receiving the initial frame of the AP, a time when a receiver address (RA) of at least one MPDU included in the initial frame is identified as corresponding to the STA 1-1 or STA 1-2, or an end time of receiving the initial frame. As another method, the start time of the non-communication period may start at a time when spatial streams are unavailable for the STA 1-3. The start time of the non-communication period may be identified when the STA (e.g., STA 1-1 or STA 1-2) indicated by the RA of the MPDU successfully completes decoding of the MPDU.

An end time of the non-communication period may be a time after an EMLMR delay from a transmission time of the last frame on the first link or the second link. If the non-communication period is equal to or longer than a specific time (e.g., aMediumSyncThreshold), a MediumSyncDelay time (e.g., MediumSyncDelay timer) may start after the non-communication period. When the STA MLD 1 is an STR STA MLD, even if end times of frames transmitted on the first link and the second link are not the same, a problem may not occur. In the case where there is no issue even if the end times of the frames transmitted on the first link and the second link are not the same, RF chain(s) may be switched to the third link at a time when reception or transmission of a frame is first completed (e.g., a reception completion time or transmission completion time of the frame), and normal operations may be performed. In other words, the end time of the non-communication period may be a time when reception or transmission of a frame on the first link and/or the second link is first completed.

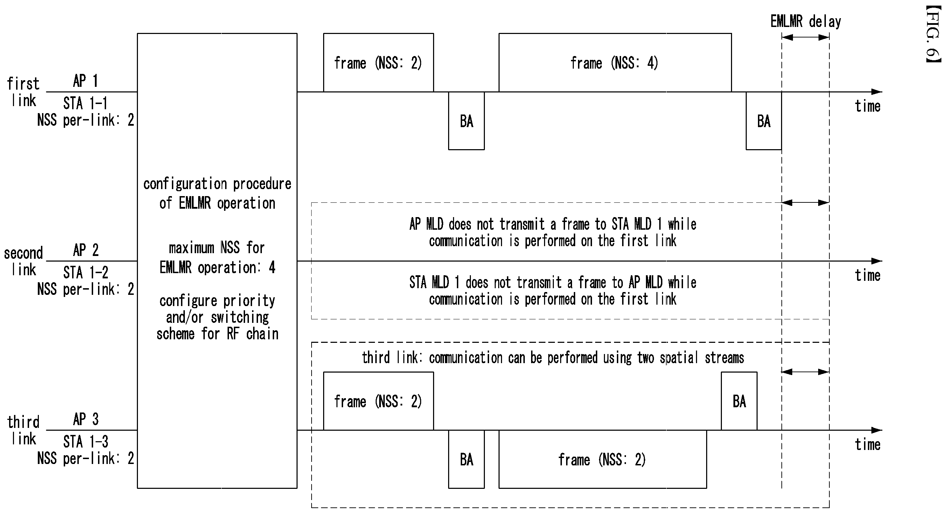

FIG. 6 is a timing diagram illustrating a third exemplary embodiment of multi-link communication in a wireless LAN supporting EMLMR operations.

As shown in FIG. 6, an AP 1, AP 2, and AP 3 may be APs affiliated with an AP MLD. The AP 1 may operate on a first link, the AP 2 may operate on a second link, and the AP 3 may operate on a third link. A STA 1-1, STA 1-2, and STA 1-3 may be STAs affiliated with a STA MLD 1. The STA 1-1 may operate on the first link, the STA 1-2 may operate on the second link, and the STA 1-3 may operate on the third link.

Each of the STA 1-1, STA 1-2, and STA 1-3, which are affiliated with the STA MLD 1, may transmit and receive frames using 2 spatial streams. In other words, the number of per-link spatial streams may be 2. The number of per-link spatial streams (e.g., 2) may be an initial NSS or default NSS for each link. The STA MLD 1 and AP MLD may perform a configuration procedure of EMLMR operation. EMLMR operation may be configured between the STA MLD 1 and AP MLD. A STA MLD for which EMLMR operation is configured (e.g., STA MLD that supports EMLMR operation) may be referred to as an EMLMR STA MLD. A STA for which EMLMR operation is configured (e.g., STA that supports EMLMR operation) may be referred to as an EMLMR STA. For example, the STA MLD 1 may be an EMLMR STA MLD, and each of the STA 1-1, STA 1-2, and STA 1-3 may be an EMLMR STA. A link on which an EMLMR STA MLD performs EMLMR operation may be referred to as an EMLMR link. For example, the STA MLD 1 may perform EMLMR operation on the first link, the second link, and the third link, and the first link, the second link, and the third link may be referred to as EMLMR links.

In the configuration procedure (e.g., negotiation procedure) of EMLMR operation between the STA MLD 1 and AP MLD, the maximum NSS used for EMLMR operation may be configured. In other words, the STA MLD 1 and AP MLD may configure the maximum NSS for EMLMR operation. For example, the maximum NSS for EMLMR operation may be configured as 4. The maximum NSS (e.g., 4) may be configured to be smaller than the maximum number of spatial streams supported by the STA MLD 1. The STA MLD 1 may configure the maximum NSS for EMLMR operation to a smaller value in order to perform communication on multiple links.

When EMLMR operation is configured and the STA MLD 1 (e.g., each STA affiliated with the STA MLD 1) receives an initial frame from the AP MLD (e.g., each AP affiliated with the AP MLD), the STA MLD 1 may switch RF chain(s) operating on other links to a link on which the initial frame is received. In other words, spatial streams configured for other link(s) may be reconfigured for the link on which the initial frame is received. The number of spatial streams used for transmitting the initial frame may be equal to or less than the number of spatial streams available to each STA affiliated with the STA MLD. The number of spatial streams available to each STA may correspond to the number of spatial streams available per link (e.g., default NSS).

The initial frame may further include padding bit(s) corresponding to an EMLMR delay time (e.g., at least one of an EMLMR padding delay or EMLMR transition delay) for an RF chain switching time (e.g., spatial stream reconfiguration time). Since the maximum NSS for EMLMR operation is configured, the STA may perform transmission and reception operations for frames (e.g., data frames) using up to a number of spatial streams, corresponding to the maximum NSS, after receiving the initial frame. For example, if the maximum NSS for EMLMR operation is configured as 4, the STA may perform communication using up to 4 spatial streams after receiving the initial frame.

In the configuration procedure of EMLMR operation, a priority of an RF chain (e.g., a priority of a spatial stream) on each link for the RF chain switching operation may be configured. Additionally, an RF chain switching scheme (e.g., a scheme of switching spatial streams) may also be configured during the configuration procedure of EMLMR operation. For example, the priority and/or switching scheme of RF chains may be configured as follows. In the present disclosure, 'RF chain' may be interpreted as having a meaning corresponding to a spatial stream.
- When an initial frame is received on the first link, an RF chain of the second link may be preferentially switched to the first link.
- When an initial frame is received on the second link, an RF chain of the third link may be preferentially switched to the second link.
- When an initial frame is received on the third link, an RF chain of the second link may be preferentially switched to the third link.
- Switching scheme (e.g., reconfiguration scheme): An RF chain may be used first on a link assigned a priority (e.g., a link with a high priority or the link on which the initial frame is received).

For example, when the STA 1-1 of the STA MLD 1 receives an initial frame on the first link, RF chain(s) of the STA 1-2 operating on the second link may be preferentially switched to the first link. Since the maximum NSS for EMLMR operation is 4, the STA 1-1 may use the RF chain(s) of the STA 1-2 to perform communication. While the STA 1-1 is performing communication on the first link, the STA 1-2 may not perform communication on the second link. In other words, due to the reconfiguration of spatial streams, there are no remaining spatial streams on the second link (e.g., STA 1-2 operating on the second link), and thus the STA 1-2 may not perform communication on the second link. Based on the preconfigured priorities and/or switching scheme, the AP MLD 1 may determine that no RF chains (e.g., no remaining spatial streams) remain for the STA 1-2. Therefore, while the AP 1 of the AP MLD is performing communication with the STA 1-1 on the first link, the AP 2 of the AP MLD may not perform communication with the STA 1-2 on the second link.

A start time of the non-communication period may be a start time of receiving the initial frame of the AP, a time when an RA of at least one MPDU included in the initial frame is identified as corresponding to the STA 1-1, or an end time of receiving the initial frame. As another method, the start time of the non-communication period may be a time when no spatial streams are available for the STA 1-2. The start time of the non-communication period may be identified when the STA (e.g., STA 1-1) indicated by the RA of the MPDU successfully completes decoding of the MPDU. An end time of the non-communication period may be a time after an EMLMR delay from a transmission time of the last frame on the first link. After the non-communication period, a MediumSyncDelay time (e.g., MediumSyncDelay timer) may start.

Although the RF chain(s) of the STA 1-2 have been switched to the STA 1-1, RF chain(s) may remain for the STA 1-3. Therefore, even while the STA 1-1 is performing communication with the AP 1 on the first link, the STA 1-3 may perform communication with the AP 3 using 2 spatial streams. Based on the preconfigured priorities and/or switching scheme, the AP MLD may identify that RF chain(s) remain for the STA 1-3. Therefore, the AP 3 of the AP MLD may perform communication with the STA 1-3 using 2 spatial streams.

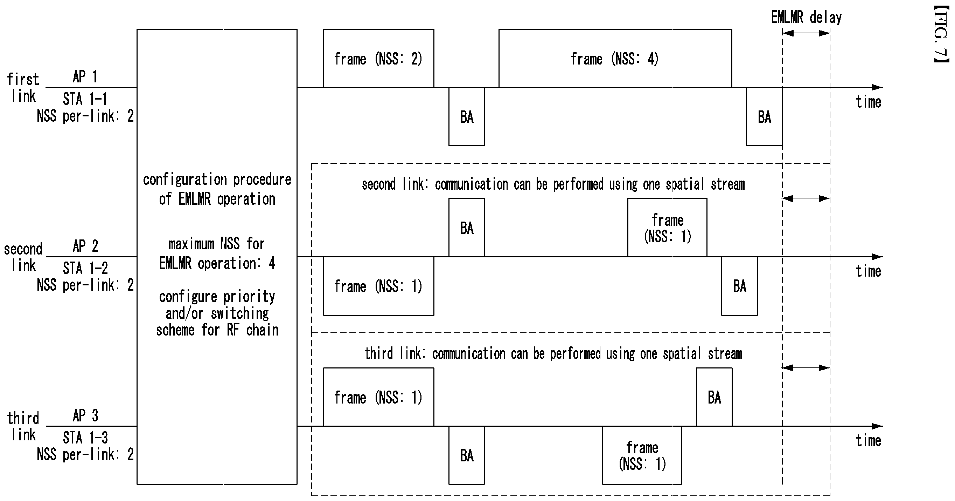

FIG. 7 is a timing diagram illustrating a fourth exemplary embodiment of multi-link communication in a wireless LAN supporting EMLMR operations.

As shown in FIG. 7, an AP 1, AP 2, and AP 3 may be APs affiliated with an AP MLD. The AP 1 may operate on a first link, the AP 2 may operate on a second link, and the AP 3 may operate on a third link. A STA 1-1, STA 1-2, and STA 1-3 may be STAs affiliated with a STA MLD 1. The STA 1-1 may operate on the first link, the STA 1-2 may operate on the second link, and the STA 1-3 may operate on the third link.

Each of the STA 1-1, STA 1-2, and STA 1-3, which are affiliated with the STA MLD 1, may transmit and receive frames using 2 spatial streams. In other words, the number of per-link spatial streams may be 2. The number of per-link spatial streams (e.g., 2) may be an initial NSS or default NSS for each link. The STA MLD 1 and AP MLD may perform a configuration procedure of EMLMR operation. EMLMR operation may be configured between the STA MLD 1 and AP MLD. A STA MLD for which EMLMR operation is configured (e.g., STA MLD that supports EMLMR operation) may be referred to as an EMLMR STA MLD. A STA for which EMLMR operation is configured (e.g., STA that supports EMLMR operation) may be referred to as an EMLMR STA. For example, the STA MLD 1 may be an EMLMR STA MLD, and each of the STA 1-1, STA 1-2, and STA 1-3 may be an EMLMR STA. A link on which an EMLMR STA MLD performs EMLMR operation may be referred to as an EMLMR link. For example, the STA MLD 1 may perform EMLMR operation on the first link, the second link, and the third link, and the first link, the second link, and the third link may be referred to as EMLMR links.

In the configuration procedure (e.g., negotiation procedure) of EMLMR operation between the STA MLD 1 and AP MLD, the maximum NSS used for EMLMR operation may be configured. In other words, the STA MLD 1 and AP MLD may configure the maximum NSS for EMLMR operation. For example, the maximum NSS for EMLMR operation may be configured as 4. The maximum NSS (e.g., 4) may be configured to be smaller than the maximum number of spatial streams supported by the STA MLD 1. The STA MLD 1 may configure the maximum NSS for EMLMR operation to a smaller value in order to perform communication on multiple links.

When EMLMR operation is configured and the STA MLD 1 (e.g., each STA affiliated with the STA MLD 1) receives an initial frame from the AP MLD (e.g., each AP affiliated with the AP MLD), the STA MLD 1 may switch RF chain(s) operating on other links to a link on which the initial frame is received. In other words, spatial streams configured for other link(s) may be reconfigured for the link on which the initial frame is received. The number of spatial streams used for transmitting the initial frame may be equal to or less than the number of spatial streams available to each STA affiliated with the STA MLD. The number of spatial streams available to each STA may correspond to the number of spatial streams available per link (e.g., default NSS).

The initial frame may further include padding bit(s) corresponding to an EMLMR delay time (e.g., at least one of an EMLMR padding delay or EMLMR transition delay) for an RF chain switching time (e.g., spatial stream reconfiguration time). Since the maximum NSS for EMLMR operation is configured, the STA may perform transmission and reception operations for frames (e.g., data frames) using up to a number of spatial streams, corresponding to the maximum NSS, after receiving the initial frame. For example, if the maximum NSS for EMLMR operation is configured as 4, the STA may perform communication using up to 4 spatial streams after receiving the initial frame.

In the configuration procedure of EMLMR operation, a priority of an RF chain (e.g., a priority of a spatial stream) on each link for the RF chain switching operation may be configured. Additionally, an RF chain switching scheme (e.g., a scheme of switching spatial streams) may also be configured during the configuration procedure of EMLMR operation. For example, the priority and/or switching scheme of RF chains may be configured as follows. In the present disclosure, 'RF chain' may be interpreted as having a meaning corresponding to a spatial stream.
- When an initial frame is received on the first link, an RF chain of the second link may be preferentially switched to the first link.
- When an initial frame is received on the second link, an RF chain of the third link may be preferentially switched to the second link.
- When an initial frame is received on the third link, an RF chain of the second link may be preferentially switched to the third link.
- Switching scheme (e.g., reconfiguration scheme): When the RF chain switching operation is performed, the RF chain switching operation may be performed such that at least one RF chain remains on each link. In specific situations, a link without any RF chain may occur after performing the RF chain switching operation.

For example, when the STA 1-1 of the STA MLD 1 receives an initial frame on the first link, RF chain(s) of the STA 1-2 operating on the second link may be preferentially switched to the first link. According to the RF chain switching scheme, the RF chain switching operation may be performed such that at least one RF chain remains on each link. Accordingly, among the two RF chains of the STA 1-2 operating on the second link, one RF chain may be switched to the first link, and one RF chain may remain on the STA 1-2. Additionally, to allow the STA 1-1 to use 4 spatial streams, RF chain(s) of the STA 1-3 operating on the third link may be switched to the first link. For example, considering the RF chain switching scheme, among the two RF chains of the STA 1-3 operating on the third link, one RF chain may be switched to the first link, and one RF chain may remain on the STA 1-3.

According to the RF chain switching operation, the STA 1-1 may have 4 RF chains, the STA 1-2 may have one RF chain, and the STA 1-3 may have one RF chain. The STA 1-1 may perform communication with the AP 1 using 4 spatial streams, the STA 1-2 may perform communication with the AP 2 using one spatial stream, and the STA 1-3 may perform communication with the AP 3 using one spatial stream. Based on the preconfigured priorities and/or switching scheme, the AP MLD 1 may determine that one RF chain exists for each of the STA 1-2 and STA 1-3. While communication between the AP 1 and STA 1-1 is performed on the first link, communication between the AP 2 and STA 1-2 on the second link may be performed using one spatial stream, and communication between the AP 3 and STA 1-3 on the third link may also be performed using one spatial stream. Since the STA 1-2 and STA 1-3 have each successfully transmitted and received frames on the second link and the third link, respectively, they may not lose medium synchronization. Accordingly, a MediumSyncDelay time may not be applied to communication on the second link and the third link, respectively.

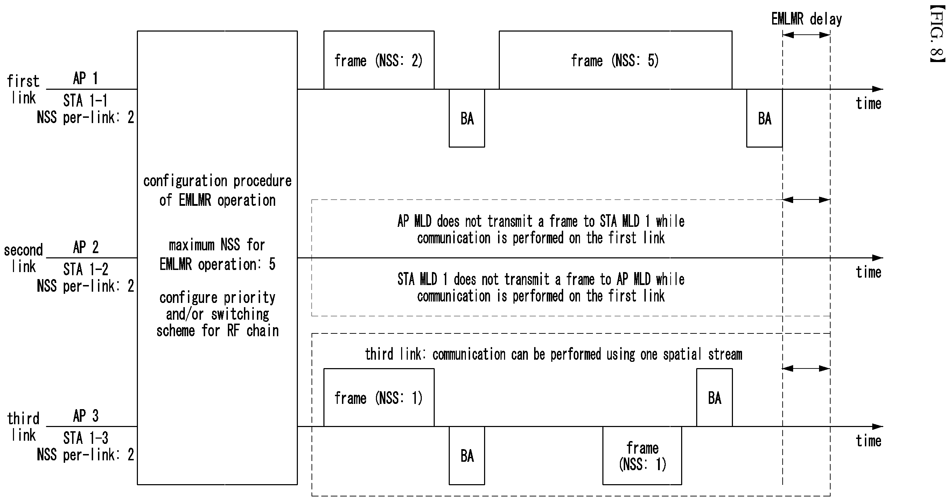

FIG. 8 is a timing diagram illustrating a fifth exemplary embodiment of multi-link communication in a wireless LAN supporting EMLMR operations.

As shown in FIG. 8, an AP 1, AP 2, and AP 3 may be APs affiliated with an AP MLD. The AP 1 may operate on a first link, the AP 2 may operate on a second link, and the AP 3 may operate on a third link. A STA 1-1, STA 1-2, and STA 1-3 may be STAs affiliated with a STA MLD 1. The STA 1-1 may operate on the first link, the STA 1-2 may operate on the second link, and the STA 1-3 may operate on the third link.

Each of the STA 1-1, STA 1-2, and STA 1-3, which are affiliated with the STA MLD 1, may transmit and receive frames using 2 spatial streams. In other words, the number of per-link spatial streams may be 2. The number of per-link spatial streams (e.g., 2) may be an initial NSS or default NSS for each link. The STA MLD 1 and AP MLD may perform a configuration procedure of EMLMR operation. EMLMR operation may be configured between the STA MLD 1 and AP MLD. A STA MLD for which EMLMR operation is configured (e.g., STA MLD that supports EMLMR operation) may be referred to as an EMLMR STA MLD. A STA for which EMLMR operation is configured (e.g., STA that supports EMLMR operation) may be referred to as an EMLMR STA. For example, the STA MLD 1 may be an EMLMR STA MLD, and each of the STA 1-1, STA 1-2, and STA 1-3 may be an EMLMR STA. A link on which an EMLMR STA MLD performs EMLMR operation may be referred to as an EMLMR link. For example, the STA MLD 1 may perform EMLMR operation on the first link, the second link, and the third link, and the first link, the second link, and the third link may be referred to as EMLMR links.

In the configuration procedure (e.g., negotiation procedure) of EMLMR operation between the STA MLD 1 and AP MLD, the maximum NSS used for EMLMR operation may be configured. In other words, the STA MLD 1 and AP MLD may configure the maximum NSS for EMLMR operation. For example, the maximum NSS for EMLMR operation may be configured as 5. The maximum NSS (e.g., 5) may be configured to be smaller than the maximum number of spatial streams supported by the STA MLD 1. The STA MLD 1 may configure the maximum NSS for EMLMR operation to a smaller value in order to perform communication on multiple links.

When EMLMR operation is configured and the STA MLD 1 (e.g., each STA affiliated with the STA MLD 1) receives an initial frame from the AP MLD (e.g., each AP affiliated with the AP MLD), the STA MLD 1 may switch RF chain(s) operating on other links to a link on which the initial frame is received. In other words, spatial streams configured for other link(s) may be reconfigured for the link on which the initial frame is received. The number of spatial streams used for transmitting the initial frame may be equal to or less than the number of spatial streams available to each STA affiliated with the STA MLD. The number of spatial streams available to each STA may correspond to the number of spatial streams available per link (e.g., default NSS).

The initial frame may further include padding bit(s) corresponding to an EMLMR delay time (e.g., at least one of an EMLMR padding delay or EMLMR transition delay) for an RF chain switching time (e.g., spatial stream reconfiguration time). Since the maximum NSS for EMLMR operation is configured, the STA may perform transmission and reception operations for frames (e.g., data frames) using up to a number of spatial streams, corresponding to the maximum NSS, after receiving the initial frame. For example, if the maximum NSS for EMLMR operation is configured as 5, the STA may perform communication using up to 5 spatial streams after receiving the initial frame.

In the configuration procedure of EMLMR operation, a priority of an RF chain (e.g., a priority of a spatial stream) on each link for the RF chain switching operation may be configured. Additionally, an RF chain switching scheme (e.g., a scheme of switching spatial streams) may also be configured during the configuration procedure of EMLMR operation. For example, the priority and/or switching scheme of RF chains may be configured as follows. In the present disclosure, 'RF chain' may be interpreted as having a meaning corresponding to a spatial stream.
- When an initial frame is received on the first link, an RF chain of the second link may be preferentially switched to the first link.
- When an initial frame is received on the second link, an RF chain of the third link may be preferentially switched to the second link.
- When an initial frame is received on the third link, an RF chain of the second link may be preferentially switched to the third link.
- Switching scheme (e.g., reconfiguration scheme): When the RF chain switching operation is performed, the RF chain switching operation may be performed such that at least one RF chain remains on each link. In specific situations, a link without any RF chain may occur after performing the RF chain switching operation.

For example, when the STA 1-1 of the STA MLD 1 receives an initial frame on the first link, RF chain(s) of the STA 1-2 operating on the second link may be preferentially switched to the first link. According to the RF chain switching scheme, the RF chain switching operation may be performed such that at least one RF chain remains on each link. Therefore, among the two RF chains of the STA 1-2 operating on the second link, one RF chain may be switched to the first link, and one RF chain may remain with the STA 1-2. Additionally, RF chain(s) of the STA 1-3 operating on the third link may be switched to the first link. For example, considering the RF chain switching scheme, among the two RF chains of the STA 1-3 operating on the third link, one RF chain may be switched to the first link, and one RF chain may remain with the STA 1-3.

According to the RF chain switching operation, the STA 1-1 may have 4 RF chains, the STA 1-2 may have one RF chain, and the STA 1-3 may have one RF chain. To use 5 spatial streams, the STA 1-1 may require one additional RF chain. In this case, based on the priorities of RF chains, the remaining RF chain of the STA 1-2 may be switched to the first link. According to the RF chain switching operation, the STA 1-1 may have 5 RF chains, the STA 1-2 may have no RF chains, and the STA 1-3 may have one RF chain.

The STA 1-1 may perform communication with the AP 1 using 5 spatial streams, and the STA 1-3 may perform communication with the AP 3 using one spatial stream. While communication between the STA 1-1 and AP 1 is performed on the first link, the STA 1-2 may not be able to perform communication with the AP 2 on the second link. In other words, since there are no remaining spatial streams on the second link (e.g., the STA 1-2 operating on the second link), the STA 1-2 may not be able to perform communication with the AP 2 on the second link. The AP MLD 1 may determine, based on the preconfigured priorities and/or switching scheme, that no RF chains are available for the STA 1-2 and that one RF chain is available for the STA 1-3. While communication between the STA 1-1 and AP 1 is performed on the first link, communication between the STA 1-3 and AP 3 on the third link may be performed using one spatial stream. Since the STA 1-3 has successfully transmitted and received frames and does not lose medium synchronization, a MediumSyncDelay time may not be applied to communication on the third link. The STA 1-2 may perform communication after an EMLMR delay from an end time of communication between the STA 1-1 and AP 1. Since the STA 1-2 has not monitored a channel for a certain period, a MediumSyncDelay time (e.g., MediumSyncDelay timer) may be applied to communication on the second link.

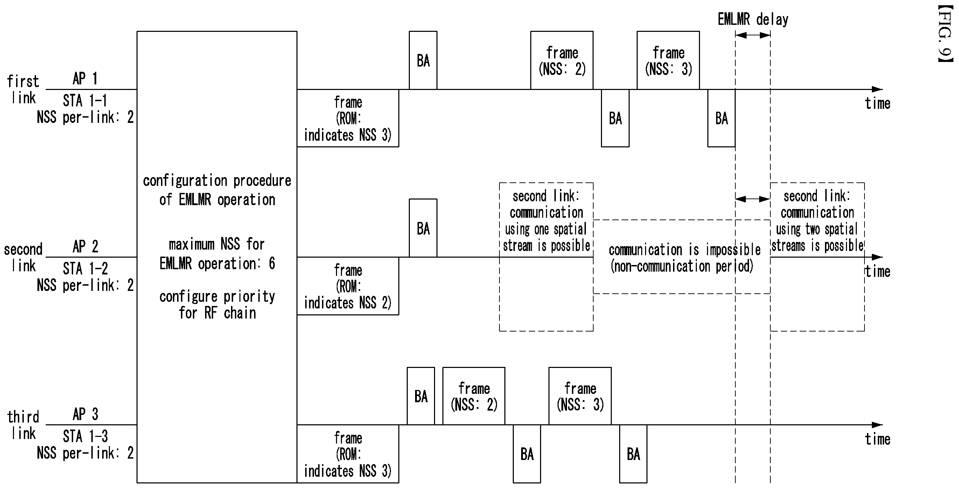

FIG. 9 is a timing diagram illustrating a sixth exemplary embodiment of multi-link communication in a wireless LAN supporting EMLMR operations.

As shown in FIG. 9, an AP 1, AP 2, and AP 3 may be APs affiliated with an AP MLD. The AP 1 may operate on a first link, the AP 2 may operate on a second link, and the AP 3 may operate on a third link. A STA 1-1, STA 1-2, and STA 1-3 may be STAs affiliated with a STA MLD 1. The STA 1-1 may operate on the first link, the STA 1-2 may operate on the second link, and the STA 1-3 may operate on the third link.

Each of the STA 1-1, STA 1-2, and STA 1-3, which are affiliated with the STA MLD 1, may transmit and receive frames using 2 spatial streams. In other words, the number of per-link spatial streams may be 2. The number of per-link spatial streams (e.g., 2) may be an initial NSS or default NSS for each link. The STA MLD 1 and AP MLD may perform a configuration procedure of EMLMR operation. EMLMR operation may be configured between the STA MLD 1 and AP MLD. A STA MLD for which EMLMR operation is configured (e.g., STA MLD that supports EMLMR operation) may be referred to as an EMLMR STA MLD. A STA for which EMLMR operation is configured (e.g., STA that supports EMLMR operation) may be referred to as an EMLMR STA. For example, the STA MLD 1 may be an EMLMR STA MLD, and each of the STA 1-1, STA 1-2, and STA 1-3 may be an EMLMR STA. A link on which an EMLMR STA MLD performs EMLMR operation may be referred to as an EMLMR link. For example, the STA MLD 1 may perform EMLMR operation on the first link, the second link, and the third link, and the first link, the second link, and the third link may be referred to as EMLMR links.

In the configuration procedure (e.g., negotiation procedure) of EMLMR operation between the STA MLD 1 and AP MLD, the maximum NSS used for EMLMR operation may be configured. In other words, the STA MLD 1 and AP MLD may configure the maximum NSS for EMLMR operation. For example, the maximum NSS for EMLMR operation may be configured as 6.

When EMLMR operation is configured and the STA MLD 1 (e.g., each STA affiliated with the STA MLD 1) receives an initial frame from the AP MLD (e.g., each AP affiliated with the AP MLD), the STA MLD 1 may switch RF chain(s) operating on other links to a link on which the initial frame is received. In other words, spatial streams configured for other link(s) may be reconfigured for the link on which the initial frame is received. The number of spatial streams used for transmitting the initial frame may be equal to or less than the number of spatial streams available to each STA affiliated with the STA MLD. The number of spatial streams available to each STA may correspond to the number of spatial streams available per link (e.g., default NSS).

When the maximum NSS for EMLMR operation is configured, the STA may perform communication using up to a number of streams, corresponding to the maximum NSS, after receiving the initial frame. The initial frame may further include padding bit(s) corresponding to an EMLMR delay time (e.g., at least one of an EMLMR padding delay or EMLMR transition delay) for an RF chain switching time (e.g., spatial stream reconfiguration time). For example, if the maximum NSS for EMLMR operation is configured as 6, the STA may perform communication using up to 6 spatial streams after receiving the initial frame.

The STA MLD 1 may support an OMI. The STA 1-1 may transmit a receiving operating mode (ROM) indicating NSS=3 to the AP 1. In other words, the STA 1-1 may indicate the ROM to the AP 1. In the present disclosure, transmission of the ROM may refer to transmission of a frame including the ROM. The ROM (e.g., ROM indication) may be an OMI included in form of an A-control in an uplink frame. The AP 1 may receive the ROM (e.g., ROM indication) from the STA 1-1. The AP 1 may transmit a frame to the STA 1-1 in the next transmit opportunity (TXOP) based on information indicated by the ROM. Based on the procedure described above or a procedure similar to the procedure described above, the STA 1-2 may indicate an ROM to the AP 2, and the STA 1-3 may indicate an ROM to the AP 3. The ROM transmitted by the STA 1-2 may indicate NSS=2, and the ROM transmitted by the STA 1-3 may indicate NSS=3.

The APs of the AP MLD may perform EMLMR operations based on the NSS indicated by the most recent ROM received from the STAs of the STA MLD 1. For example, the most recent ROM received by the APs from the STAs may be the ROM received by the AP 3 from the STA 1-3, and the ROM may indicate NSS=3. The AP 3 may transmit an initial frame to the STA 1-3, and after the transmission of the initial frame, may perform communication using up to 3 spatial streams. The STA 1-3 may prepare to perform communication using 3 or fewer spatial streams.

In the configuration procedure of EMLMR operation, a priority of an RF chain (e.g., a priority of a spatial stream) for the RF chain switching operation on each link may be configured. For example, the priority of RF chains may be configured as follows. In the present disclosure, 'RF chain' is used interchangeably with the meaning of 'spatial stream'.

In the configuration procedure of EMLMR operation, a priority of an RF chain (e.g., a priority of a spatial stream) on each link for the RF chain switching operation may be configured. For example, the priority and/or switching scheme of RF chains may be configured as follows. In the present disclosure, 'RF chain' may be interpreted as having a meaning corresponding to a spatial stream.
- When an initial frame is received on the first link, an RF chain of the second link may be preferentially switched to the first link.
- When an initial frame is received on the second link, an RF chain of the third link may be preferentially switched to the second link.
- When an initial frame is received on the third link, an RF chain of the second link may be preferentially switched to the third link.

For example, the last ROM transmitted by the STA 1-3 to the AP 3 may indicate NSS=3, and the last ROM transmitted by the STA 1-1 to the AP 1 may indicate NSS=3. When the STA 1-1 and STA 1-3 receive initial frames, RF chain(s) of the STA 1-2 may be switched to the STA 1-1 and STA 1-3 according to their priorities. After the RF chain switching operation is completed, the STA 1-1 and STA 1-3 may each perform communication using 3 spatial streams. The AP 1 may transmit a frame using a number of spatial streams, which is equal to or less than the NSS indicated by the most recent ROM received from the STA 1-1. The AP 3 may transmit a frame using a number of spatial streams, which is equal to or less than the NSS indicated by the most recent ROM received from the STA 1-3.

If the RF chain(s) of the STA 1-2 are switched to the STA 1-1 and STA 1-3, the STA 1-2 may not have any RF chains (e.g., spatial streams) available. In this case, the STA 1-2 may not be able to perform communication. In other words, a non-communication period may occur on the second link where the STA 1-2 operates. After the non-communication period ends, the STA 1-2 may apply a MediumSyncDelay time. The AP MLD may identify the number of spatial streams available for each STA of the STA MLD 1 based on the preconfigured priorities, and transmit a frame to each STA of the STA MLD 1 based on the identified number of spatial streams.

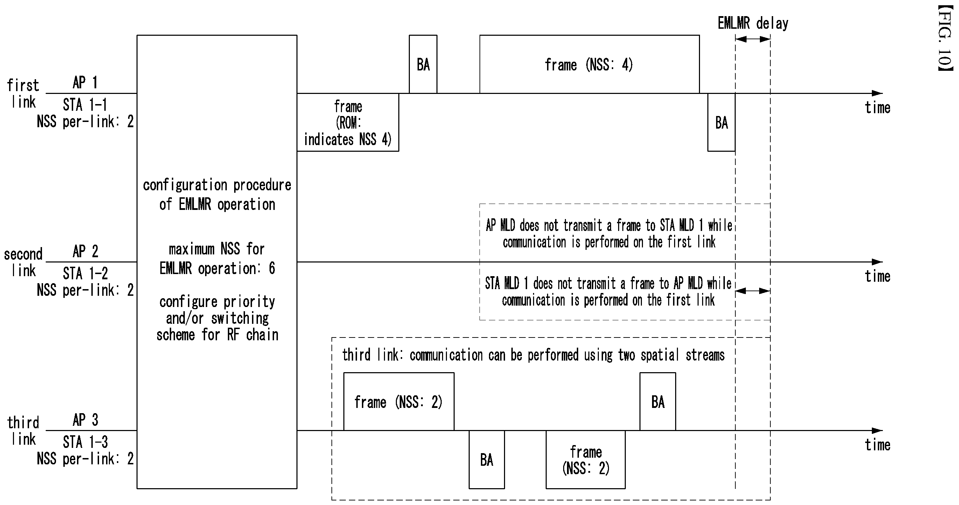

FIG. 10 is a timing diagram illustrating a seventh exemplary embodiment of multi-link communication in a wireless LAN supporting EMLMR operations.

As shown in FIG. 10, an AP 1, AP 2, and AP 3 may be APs affiliated with an AP MLD. The AP 1 may operate on a first link, the AP 2 may operate on a second link, and the AP 3 may operate on a third link. A STA 1-1, STA 1-2, and STA 1-3 may be STAs affiliated with a STA MLD 1. The STA 1-1 may operate on the first link, the STA 1-2 may operate on the second link, and the STA 1-3 may operate on the third link.

Each of the STA 1-1, STA 1-2, and STA 1-3, which are affiliated with the STA MLD 1, may transmit and receive frames using 2 spatial streams. In other words, the number of per-link spatial streams may be 2. The number of per-link spatial streams (e.g., 2) may be an initial NSS or default NSS for each link. The STA MLD 1 and AP MLD may perform a configuration procedure of EMLMR operation. EMLMR operation may be configured between the STA MLD 1 and AP MLD. A STA MLD for which EMLMR operation is configured (e.g., STA MLD that supports EMLMR operation) may be referred to as an EMLMR STA MLD. A STA for which EMLMR operation is configured (e.g., STA that supports EMLMR operation) may be referred to as an EMLMR STA. For example, the STA MLD 1 may be an EMLMR STA MLD, and each of the STA 1-1, STA 1-2, and STA 1-3 may be an EMLMR STA. A link on which an EMLMR STA MLD performs EMLMR operation may be referred to as an EMLMR link. For example, the STA MLD 1 may perform EMLMR operation on the first link, the second link, and the third link, and the first link, the second link, and the third link may be referred to as EMLMR links.

In the configuration procedure (e.g., negotiation procedure) of EMLMR operation between the STA MLD 1 and AP MLD, the maximum NSS used for EMLMR operation may be configured. In other words, the STA MLD 1 and AP MLD may configure the maximum NSS for EMLMR operation. For example, the maximum NSS for EMLMR operation may be configured as 6.

When EMLMR operation is configured and the STA MLD 1 (e.g., each STA affiliated with the STA MLD 1) receives an initial frame from the AP MLD (e.g., each AP affiliated with the AP MLD), the STA MLD 1 may switch RF chain(s) operating on other links to a link on which the initial frame is received. In other words, spatial streams configured for other link(s) may be reconfigured for the link on which the initial frame is received. The number of spatial streams used for transmitting the initial frame may be equal to or less than the number of spatial streams available to each STA affiliated with the STA MLD. The number of spatial streams available to each STA may correspond to the number of spatial streams available per link (e.g., default NSS).

When the maximum NSS for EMLMR operation is configured, the STA may perform communication using up to a number of streams, corresponding to the maximum NSS, after receiving the initial frame. The initial frame may further include padding bit(s) corresponding to an EMLMR delay time (e.g., at least one of an EMLMR padding delay or EMLMR transition delay) for an RF chain switching time (e.g., spatial stream reconfiguration time). For example, if the maximum NSS for EMLMR operation is configured as 6, the STA may perform communication using up to 6 spatial streams after receiving the initial frame.

The STA MLD 1 may support an OMI. The STA 1-1 may transmit an ROM indicating NSS=4 to the AP 1. In other words, the STA 1-1 may indicate the ROM to the AP 1. In the present disclosure, transmission of the ROM may refer to transmission of a frame including the ROM. The ROM (e.g., ROM indication) may be an OMI included in form of an A-control in an uplink frame. The AP 1 may receive the ROM (e.g., ROM indication) from the STA 1-1. The AP 1 may transmit a frame to the STA 1-1 in the next TXOP based on information indicated by the ROM. STAs other than the STA 1-1 (e.g., STA 1-2 and/or STA 1-3) may not transmit an ROM.

The APs of the AP MLD may perform EMLMR operations based on the NSS indicated by the most recent ROM received from the STAs of the STA MLD 1. For example, the most recent ROM received by the AP1 from the STA 1-1 may indicate NSS=4. The AP 1 may transmit an initial frame to the STA 1-1, and after the transmission of the initial frame, may perform communication using up to 4 spatial streams. The STA 1-1 may prepare to perform communication using up to 4 spatial streams.

In the configuration procedure of EMLMR operation, a priority of an RF chain (e.g., a priority of a spatial stream) on each link for the RF chain switching operation may be configured. Additionally, an RF chain switching scheme (e.g., a scheme of switching spatial streams) may also be configured during the configuration procedure of EMLMR operation. For example, the priority and/or switching scheme of RF chains may be configured as follows. In the present disclosure, 'RF chain' may be interpreted as having a meaning corresponding to a spatial stream.
- When an initial frame is received on the first link, an RF chain of the second link may be preferentially switched to the first link.
- When an initial frame is received on the second link, an RF chain of the third link may be preferentially switched to the second link.
- When an initial frame is received on the third link, an RF chain of the second link may be preferentially switched to the third link.
- Switching scheme (e.g., reconfiguration scheme): An RF chain may be used first on a link assigned a priority (e.g., a link with a high priority or a link on which the initial frame is received).

For example, when the STA 1-1 of the STA MLD 1 receives the initial frame from the AP 1 on the first link, RF chain(s) of the STA 1-2 operating on the second link may be preferentially switched to the first link. Since the NSS for EMLMR operation of the STA 1-1 is configured as 4 by the ROM, the RF chain(s) of the STA 1-2 may be switched to the STA 1-1. In this case, all the RF chains of the STA 1-2 (e.g., two RF chains) may be switched to the STA 1-1. Therefore, while communication between the STA 1-1 and AP 1 is performed on the first link, the STA 1-2 may not perform communication on the second link. In other words, due to the reconfiguration of spatial streams, no spatial streams remain on the second link (e.g., the STA 1-2 operating on the second link), and the STA 1-2 may not perform communication on the second link. The AP MLD 1 may identify that no RF chains remain for the STA 1-2 based on the preconfigured priorities and/or switching scheme. In this case, while communication between the AP 1 and STA 1-1 is performed on the first link, the AP 2 may not transmit frames to the STA 1-2 on the second link. In other words, a non-communication period may occur on the second link.

A start time of the non-communication period may be a start time of receiving the initial frame of the AP, a time when an RA of at least one MPDU included in the initial frame is identified as corresponding to the STA 1-1, or an end time of receiving the initial frame. As another method, the start time of the non-communication period may start from a time when no spatial streams are available for the STA 1-2. The start time of the non-communication period may be identified when the STA (e.g., STA 1-1) indicated by the RA of the MPDU successfully completes decoding of the MPDU. An end time of the non-communication period may be a time after an EMLMR delay from a transmission time of the last frame on the first link. After the non-communication period, a MediumSyncDelay time (e.g., MediumSyncDelay timer) may start.

Two RF chains may exist for the STA 1-3. Therefore, while communication between the STA 1-1 and AP 1 is performed on the first link, the STA 1-3 may perform communication with the AP 3 using 2 spatial streams. The AP MLD 1 may identify that remaining RF chains (e.g., two RF chains) exist for the STA 1-3 based on the preconfigured priorities and/or switching scheme. In this case, while communication between the AP 1 and STA 1-1 is performed on the first link, the AP 3 may perform communication with the STA 1-3 using 2 spatial streams.

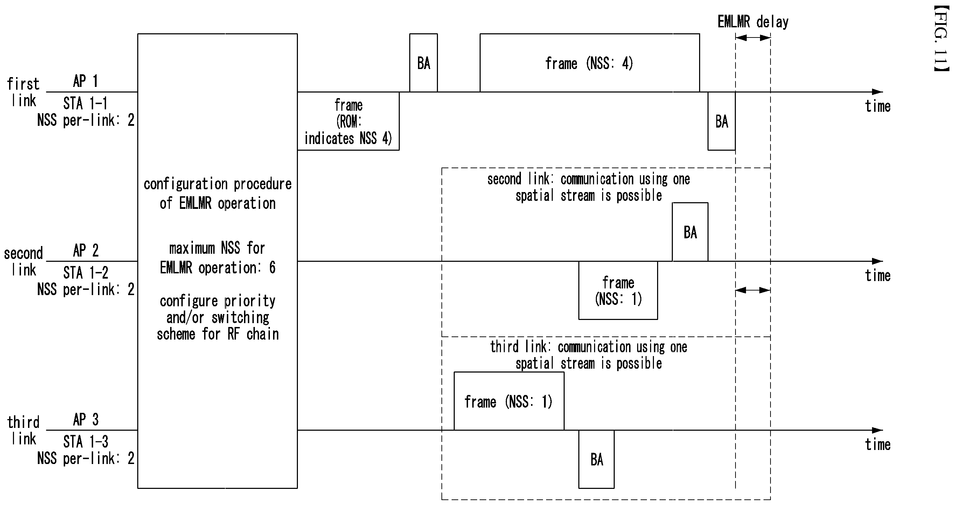

FIG. 11 is a timing diagram illustrating an eighth exemplary embodiment of multi-link communication in a wireless LAN supporting EMLMR operations.

As shown in FIG. 11, an AP 1, AP 2, and AP 3 may be APs affiliated with an AP MLD. The AP 1 may operate on a first link, the AP 2 may operate on a second link, and the AP 3 may operate on a third link. A STA 1-1, STA 1-2, and STA 1-3 may be STAs affiliated with a STA MLD 1. The STA 1-1 may operate on the first link, the STA 1-2 may operate on the second link, and the STA 1-3 may operate on the third link.

Each of the STA 1-1, STA 1-2, and STA 1-3, which are affiliated with the STA MLD 1, may transmit and receive frames using 2 spatial streams. In other words, the number of per-link spatial streams may be 2. The number of per-link spatial streams (e.g., 2) may be an initial NSS or default NSS for each link. The STA MLD 1 and AP MLD may perform a configuration procedure of EMLMR operation. EMLMR operation may be configured between the STA MLD 1 and AP MLD. A STA MLD for which EMLMR operation is configured (e.g., STA MLD that supports EMLMR operation) may be referred to as an EMLMR STA MLD. A STA for which EMLMR operation is configured (e.g., STA that supports EMLMR operation) may be referred to as an EMLMR STA. For example, the STA MLD 1 may be an EMLMR STA MLD, and each of the STA 1-1, STA 1-2, and STA 1-3 may be an EMLMR STA. A link on which an EMLMR STA MLD performs EMLMR operation may be referred to as an EMLMR link. For example, the STA MLD 1 may perform EMLMR operation on the first link, the second link, and the third link, and the first link, the second link, and the third link may be referred to as EMLMR links.

In the configuration procedure (e.g., negotiation procedure) of EMLMR operation between the STA MLD 1 and AP MLD, the maximum NSS used for EMLMR operation may be configured. In other words, the STA MLD 1 and AP MLD may configure the maximum NSS for EMLMR operation. For example, the maximum NSS for EMLMR operation may be configured as 6.

When EMLMR operation is configured and the STA MLD 1 (e.g., each STA affiliated with the STA MLD 1) receives an initial frame from the AP MLD (e.g., each AP affiliated with the AP MLD), the STA MLD 1 may switch RF chain(s) operating on other links to a link on which the initial frame is received. In other words, spatial streams configured for other link(s) may be reconfigured for the link on which the initial frame is received. The number of spatial streams used for transmitting the initial frame may be equal to or less than the number of spatial streams available to each STA affiliated with the STA MLD. The number of spatial streams available to each STA may correspond to the number of spatial streams available per link (e.g., default NSS).

When the maximum NSS for EMLMR operation is configured, the STA may perform communication using up to a number of streams, corresponding to the maximum NSS, after receiving the initial frame. The initial frame may further include padding bit(s) corresponding to an EMLMR delay time (e.g., at least one of an EMLMR padding delay or EMLMR transition delay) for an RF chain switching time. For example, if the maximum NSS for EMLMR operation is configured as 6, the STA may perform communication using up to 6 spatial streams after receiving the initial frame.

The STA MLD 1 may support an OMI. The STA 1-1 may transmit an ROM indicating NSS=4 to the AP 1. In other words, the STA 1-1 may indicate the ROM to the AP 1. The ROM (e.g., ROM indication) may be an OMI included in form of an A-control in an uplink frame. The AP 1 may receive the ROM (e.g., ROM indication) from the STA 1-1. The AP 1 may transmit a frame to the STA 1-1 in the next TXOP based on information indicated by the ROM. STAs other than the STA 1-1 (e.g., STA 1-2 and/or STA 1-3) may not transmit an ROM.

The APs of the AP MLD may perform EMLMR operations based on the NSS indicated by the most recent ROM received from the STAs of the STA MLD 1. For example, the most recent ROM received by the AP1 from the STA 1-1 may indicate NSS=4. The AP 1 may transmit an initial frame to the STA 1-1, and after the transmission of the initial frame, may perform communication using up to 4 spatial streams. The STA 1-1 may prepare to perform communication using up to 4 spatial streams.

In the configuration procedure of EMLMR operation, a priority of an RF chain (e.g., a priority of a spatial stream) on each link for the RF chain switching operation may be configured. Additionally, an RF chain switching scheme (e.g., a scheme of switching spatial streams) may also be configured during the configuration procedure of EMLMR operation. For example, the priority and/or switching scheme of RF chains may be configured as follows. In the present disclosure, 'RF chain' may be interpreted as having a meaning corresponding to a spatial stream.
- When an initial frame is received on the first link, an RF chain of the second link may be preferentially switched to the first link.
- When an initial frame is received on the second link, an RF chain of the third link may be preferentially switched to the second link.
- When an initial frame is received on the third link, an RF chain of the second link may be preferentially switched to the third link.
- Switching scheme (e.g., reconfiguration scheme): When the RF chain switching operation is performed, the RF chain switching operation may be performed such that at least one RF chain remains on each link. In specific situations, a link without any RF chain may occur after performing the RF chain switching operation.

For example, when the STA 1-1 of the STA MLD 1 receives an initial frame on the first link, RF chain(s) of the STA 1-2 operating on the second link may be preferentially switched to the first link. According to the RF chain switching scheme, the RF chain switching operation may be performed such that at least one RF chain remains on each link. Therefore, among the two RF chains of the STA 1-2 operating on the second link, one RF chain may be switched to the first link, and one RF chain may remain with the STA 1-2. Additionally, in order for the STA 1-1 to use 4 spatial streams, the RF chain of the STA 1-3 operating on the third link may be switched to the first link. For example, considering the RF chain switching scheme, among the two RF chains of STA 1-3 operating on the third link, one RF chain may be switched to the first link, and one RF chain may remain with the STA 1-3.

According to the RF chain switching operation, the STA 1-1 may have 4 RF chains, the STA 1-2 may have one RF chain, and the STA 1-3 may have one RF chain. The STA 1-1 may perform communication with the AP 1 using 4 spatial streams, the STA 1-2 may perform communication with the AP 2 using one spatial stream, and the STA 1-3 may perform communication with the AP 3 using one spatial stream. The AP MLD 1 may determine that one RF chain exists for each of the STA 1-2 and STA 1-3 based on the preconfigured priorities and/or switching scheme. While communication between the AP 1 and STA 1-1 is performed on the first link, communication between the AP 2 and STA 1-2 on the second link may be performed using one spatial stream, and communication between the AP 3 and STA 1-3 on the third link may be performed using one spatial stream. The STA 1-2 and STA 1-3 may each perform frame transmission and reception on the second link and the third link, respectively, without losing medium synchronization. Therefore, a MediumSyncDelay time may not apply to communication on the second link and the third link.

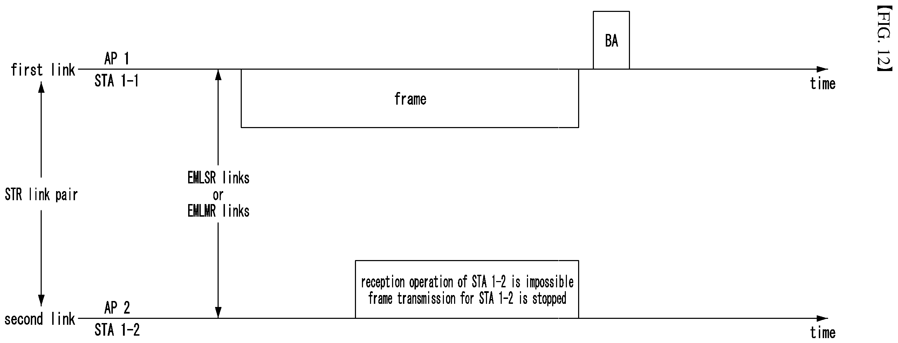

FIG. 12 is a timing diagram illustrating a first exemplary embodiment of multi-link communication in a wireless LAN supporting EMLMR operation and EMLSR operation.

As shown in FIG. 12, an AP 1 and AP 2 may be APs affiliated with an AP MLD. The AP 1 may operate on a first link, and the AP 2 may operate on a second link. A STA 1-1 and STA 1-2 may be STAs affiliated with a STA MLD 1. The STA 1-1 may operate on the first link, and the STA 1-2 may operate on the second link. The first link and the second link may be an STR link pair. STR operations may be possible in the STR link pair. The STA MLD 1 may perform EMLSR operation or EMLMR operation on the first link and the second link. Links where EMLSR operation is performed may be EMLSR links, and links where EMLMR operation is performed may be EMLMR links. The STA MLD 1 may perform a configuration procedure of EMLSR operation or EMLMR operation with the AP MLD. In other words, EMLSR operation or EMLMR operation may be configured between the STA MLD 1 and the AP MLD.

Based on EMLSR operation and/or EMLMR operation, communication on the second link may not be possible while the STA MLD 1 performs communication on the first link. Similarly, based on EMLSR operation and/or EMLMR operation, communication on the first link may not be possible while the STA MLD 1 performs communication on the second link. If communication (e.g., frame transmission and reception) is performed between the AP MLD and STA MLD 1 on the first link, communication on the second link may not be performed. If communication is performed between the AP MLD and STA MLD 1 on the first link, ongoing communication on the second link (e.g., operation of transmitting frames to the STA 1-2) may be suspended. If communication (e.g., frame transmission and reception) is performed between the AP MLD and STA MLD 1 on the second link, communication on the first link may not be performed. If communication is performed between the AP MLD and STA MLD 2 on the second link, ongoing communication on the first link (e.g., operation of transmitting frames to the STA 1-1) may be suspended.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a station (STA) multi-link device (MLD), comprising:
configuring a maximum number of spatial streams (NSS) for an enhanced multi-link multi-radio (EMLMR) operation with an access point (AP) MLD;
receiving, from the AP MLD, an instruction to use n spatial streams equal to or fewer than the maximum NSS on a first link; and
performing communication with the AP MLD using n spatial streams on the first link,
wherein n is a natural number.

2. The method according to claim 1, further comprising: performing communication with the AP MLD using (maximum NSS - n) spatial streams on the second link.

3. The method according to claim 1, wherein when (maximum NSS - n) is 0, communication between the STA MLD and the AP MLD is not performed on link(s) other than the first link.

4. The method according to claim 1, further comprising: performing communication with the AP MLD using a number of spatial streams corresponding to a default NSS on each link,
wherein when the EMLMR operation is configured and the maximum NSS is configured, communication between the STA MLD and the AP MLD on each link is performed using a number of spatial streams equal to or fewer than the maximum NSS.

5. The method according to claim 4, wherein when n exceeds the default NSS, one or more spatial streams configured for link(s) other than the first link are reconfigured for the first link, and a sum of the number of the one or more spatial streams and the default NSS is n.

6. The method according to claim 5, wherein the reconfiguring of the one or more spatial streams is performed based on at least one of priorities or a reconfiguration scheme of spatial streams on each link.

7. The method according to claim 1, further comprising: configuring a maximum power saving (PS)-NSS for a power saving operation with the AP MLD,
wherein when the power saving operation is performed on a link other than the first link, communication between the STA MLD and the AP MLD on the first link is performed using a number of spatial streams equal to or fewer than the maximum PS-NSS, and the maximum PS-NSS is configured to be smaller than the maximum NSS.

8. The method according to claim 1, wherein an initial frame received from the AP MLD on the first link includes the instruction to use n spatial streams.

9. The method according to claim 1, wherein the maximum NSS is configured in a configuration procedure of the EMLMR operation between the STA MLD and the AP MLD.

10. A method of a station (STA) multi-link device (MLD), comprising:
configuring a maximum number of spatial streams (NSS) for an enhanced multi-link multi-radio (EMLMR) operation with an access point (AP) MLD;
transmitting, to the AP MLD, an instruction to use n spatial streams equal to or fewer than the maximum NSS on a first link; and
performing communication with the AP MLD using n spatial streams on the first link,
where n is a natural number.

11. The method according to claim 10, further comprising: performing communication with the AP MLD using (maximum NSS - n) spatial streams on the second link.

12. The method according to claim 10, wherein when (maximum NSS - n) is 0, communication between the STA MLD and the AP MLD is not performed on link(s) other than the first link.

13. The method according to claim 10, further comprising: performing communication with the AP MLD using a number of spatial streams corresponding to a default NSS on each link,
wherein when the EMLMR operation is configured and the maximum NSS is configured, communication between the STA MLD and the AP MLD on each link is performed using a number of spatial streams equal to or fewer than the maximum NSS.

14. The method according to claim 13, wherein when n exceeds the default NSS, one or more spatial streams configured for link(s) other than the first link are reconfigured for the first link, and a sum of the number of the one or more spatial streams and the default NSS is n.

15. The method according to claim 14, wherein the reconfiguring of the one or more spatial streams is performed based on at least one of priorities or a reconfiguration scheme of spatial streams on each link.

16. A method of an access point (AP) multi-link device (MLD), comprising:
configuring a maximum number of spatial streams (NSS) for an enhanced multi-link multi-radio (EMLMR) operation with a station (STA) MLD;
transmitting, to the STA MLD, an instruction to use n spatial streams equal to or fewer than the maximum NSS on a first link; and
performing communication with the STA MLD using n spatial streams on the first link,
where n is a natural number.

17. The method according to claim 16, further comprising: performing communication with the STA MLD using (maximum NSS - n) spatial streams on the second link.

18. The method according to claim 16, wherein when (maximum NSS - n) is 0, communication between the STA MLD and the AP MLD is not performed on link(s) other than the first link.

19. The method according to claim 16, further comprising: performing communication with the STA MLD using a number of spatial streams corresponding to a default NSS on each link,
wherein when the EMLMR operation is configured and the maximum NSS is configured, communication between the STA MLD and the AP MLD on each link is performed using a number of spatial streams equal to or fewer than the maximum NSS.

20. The method according to claim 16, further comprising: configuring a maximum power saving (PS)-NSS for a power saving operation with the STA MLD,
wherein when the power saving operation is performed on a link other than the first link, communication between the STA MLD and the AP MLD on the first link is performed using a number of spatial streams equal to or fewer than the maximum PS-NSS, and the maximum PS-NSS is configured to be smaller than the maximum NSS.
